# EUROPÄISCHE PATENTSCHRIFT

(11) **EP 1 643 643 B1**
(45) Veröffentlichungstag und Bekanntmachung des Hinweises auf die Patenterteilung: **23.01.2008**
(21) Anmeldenummer: 05020294.4
(22) Anmeldetag: 16.09.2005
(51) Int. Cl.: H03K 3/84, G06F 7/58

(54) **Zufallszahlengenerator sowie Verfahren zur Erzeugung von Zufallszahlen**
Random number generator and method for random number generation
Générateur de nombres aléatoires et méthode associée

(30) Priorität: 28.09.2004 DE 102004047425
(43) Veröffentlichungstag der Anmeldung: 05.04.2006
(73) Patentinhaber: Micronas GmbH, 79108 Freiburg i. Br. (DE)
(72) Erfinder: Lazich, Dejan, Dr., 76297 Stutensee (DE); Alrutz, Herbert, Dr., 79102 Freiburg (DE); Temerinac, Miodrag, Dr., 79194 Gundelfingen (DE); Schober, Steffen, Dipl. Inform., 76185 Karlsruhe (DE)
(74) Vertreter: Patentanwälte Westphal, Mussgnug & Partner

(56) Entgegenhaltungen:
- WO-A-03/081417
- US-A- 5 961 577
- US-A- 5 963 104

## Beschreibung

Die Erfindung betrifft einen Zufallsgenerator gemäß dem Oberbegriff des Patentanspruchs 15 sowie ein Verfahren zur Erzeugung von Zufallszahlen nach dem Oberbegriff des Patentanspruchs 1.

Zufallszahlengeneratoren (engl. Random Number Generators - RNGs) dienen der automatischen Erzeugung von zufälligen binären oder mehrwertigen Zahlen (Zufallszahlen). Zufallszahlengeneratoren werden in einer Vielzahl von Anwendungsbereichen benötigt. Hierzu gehören zum Beispiel:
- Kryptografische Anwendungen,
- Stochastische Simulationen,
- Testen von Software und Hardware,
- Computerspiele.

Im Folgenden werden ausschließlich kryptografische Anwendungen von Zufallszahlengeneratoren betrachtet. Zu diesen Anwendungen gehören beispielsweise:
- Für Authentifikation:
   - Challenge-Response-Protokolle,
   - Zero-Knowledge-Beweise.
- Für Schlüsselaustausch-Protokolle:
   - Diffie-Hellmann-Verfahren,
- Zur Schlüsselerzeugung,
   - Sitzungsschlüssel für symmetrische Verschlüsselungsverfahren,
   - Schlüsselerzeugung für asymmetrische Verschlüsselungsverfahren (Public-Key-Verfahren),
   - Erzeugung von binärem Rauschen (Ontetime-Pad, Mc-Eleice Public-Key-Verfahren),
   - Parametererzeugung für Public-Key-Verfahren (z. B. die Erzeugung zufälliger Primzahlen).
- Für andere kryptografische Anwendungen:
   - Passworterzeugung,
   - Initialwerte (engl. Seeds) für deterministische Zufallszahlengeneratoren (Pseudo-Zufallszahlengeneratoren),
   - Ergänzung von Klartext-Blöcken (engl. Padding),
   - Sicheres Löschen von Speichermedien (durch mehrfaches Überschreiben mit zufälligen Bitmustern).

Im Allgemeinen werden zwei Hauptarten von Generatoren unterschieden, die deterministischen (engl. Pseudo Random Number Generator - PRNG) und die physikalischen Zufallszahlengeneratoren (engl. True Random Number Generator - TRNG). Bei deterministischen Generatoren handelt es sich um algorithmische Verfahren, welche aus einem zufällig gewählten Initialwert (engl. Initial Value - IV) eine viel längere Folge von Zahlen erzeugen, die zufällig erscheint. Natürlich kann diese Folge, durch den deterministischen Charakter der Erzeugungsmethode, per se nicht echt zufällig sein.

Um tatsächlich zufällige Folgen von Zahlen erzeugen zu können, muss daher ein so genannter physikalischer Zufallszahlengenerator verwendet werden. Dieser nutzt zur Erzeugung der Zufallszahlen entweder nichtdeterministische oder chaotische physikalische Prozesse. Durch Messung und Bearbeitung von bestimmten Prozessmessgrößen (z. B. Spannung des thermischen Rauschens an einem Widerstand), werden dann die Zufallszahlen erzeugt.

Ziel dieser Erfindung ist, einen physikalischen Zufallszahlengenerator zu realisieren, welcher in integrierten Schaltkreisen (Integrated Circuits = ICs) eingesetzt (eingebettet) werden kann und die folgenden kryptografischen und wirtschaftlich relevanten Gütekriterien erfüllt:
- Implementierbar ausschließlich unter Verwendung standardisierter Bauelemente der herkömmlichen hochintegrierten Schaltkreise (z. B. logische Gatter),
- Aufgebaut unter Nutzung möglichst weniger Bauelemente (kostengünstig, mit kleiner Oberfläche und geringem Stromverbrauch),
- Eingebettet als eigenständige, unabhängige, vor dem Einfluss anderer Einheiten geschützte Einheit auf dem IC
- Ein- und Ausschalten unabhängig von den übrigen Einheiten auf dem IC
- Schnelles Wiederherstellen der Funktionalität nach dem Einschalten (kurze Einwärme-Zeit)
- Möglichst hohe Anzahl von erzeugten Zufallbits pro Zeit (hohe Rate)
- Robustheit gegenüber Umgebungsbedingungen (Temperatur, elektromagnetische Störungen, Änderungen der Speisespannung, etc.)
- Robustheit gegenüber invasiven und nichtinvasiven Manipulationsversuchen (Angriffen)
   - Passive Angriffe
   - Aktive Angriffe
- Erfüllung statistischer Tests, welche die Qualität des Zufalls beider erzeugten Bits beurteilen
- Möglichst wenig deterministische Nachbearbeitung der erzeugten Zufallszahlen
- Möglichkeit einer Funktionalitäts- und Qualitätsprüfung während des Betriebs (Online-Test).

Im Folgenden wird davon ausgegangen, dass ein kryptografischer Zufallszahlengenerator als Bitquelle realisiert ist. Je nach Anwendung werden die einzelnen Bits zu Blöcken zusammengefasst (z. B. 56 Bits für einen Schlüssel des Data Encryption Standard - DES). Im Allgemeinen ist davon auszugehen, dass die durch einen kryptografischen Zufallszahlengenerator erzeugten Bitfolgen (z. B. ein Schlüssel) geheim bleiben müssen, um die Sicherheit des Kryptosystems nicht zu kompromittieren (in den im vorigen Abschnitt aufgeführten Anwendungen gilt dies für alle Verfahren, bis auf Challenge-Response-Protokolle und Zero-Knowledge-Beweise). In diesen Fällen erzeugt der Zufallszahlengenerator das Geheimnis (engl. Secret) des jeweiligen Kryptoverfahrens. Mithilfe dieses Geheimnisses werden nun z. B. Klartexte chiffriert. Falls dem Angreifer das Geheimnis unbekannt ist, hat er immer die Wahl alle möglichen Bitfolgen durchzuprobieren (vollständige Suche). Im obigen Beispiel würde dies bedeuten, dass der Angreifer, welcher ein mit dem unbekannten Schlüssel chiffrierten Klartext beobachtet hat, im (statistischen) Mittel 2⁵⁵ mögliche Schlüssel durchprobieren muss, bis er erwarten kann, den tatsächlich erzeugten Schlüssel gefunden zu haben. Dieser Angriff ist aus Sicht des Angreifers der schlechtest mögliche Fall. Um ein System erfolgreich anzugreifen, muss der Angreifer in der Lage sein, eine Vorhersage über eine bestimmte Anzahl von Bits zu treffen, die ein Generator zu einem bestimmten Zeitpunkt erzeugt. Dies kann ohne Kenntnis anderer vom Generator erzeugten Bitfolgen geschehen oder unter Kenntnis von Bitfolgen, die der Generator vor oder nach der unbekannten Bitfolge erzeugt hat. Der Angreifer kann entweder versuchen die erzeugte Bitfolge komplett oder nur zu Teilen zu erraten. Im letzteren Fall kann er die verbleibenden Bits durch eine vollständige Suche finden.

Um eine solche Vorhersage zu treffen, stehen dem Angreifer alle bekannten technischen und wissenschaftlichen Mittel zur Verfügung. Er ist nur hinsichtlich der für den Angriff aufzuwendenden Kosten eingeschränkt. Man kann davon ausgehen, dass diese unter einer festgelegen Kostengrenze zu liegen haben (ein ökonomisches Argument: Der zu erwartende Gewinn durch den Angriff sollte die Kosten für den Angriff nicht überschreiten).

Je nach Höhe der Kostengrenze kann die Bitquelle in verschiedene Sicherheitsstufen eingeteilt werden. Widersteht eine Bitquelle für eine gegebene Kostengrenze allen Angriffen, so soll sie, bezüglich dieser Kostengrenze, als praktisch sichere Bitquelle bezeichnet werden.

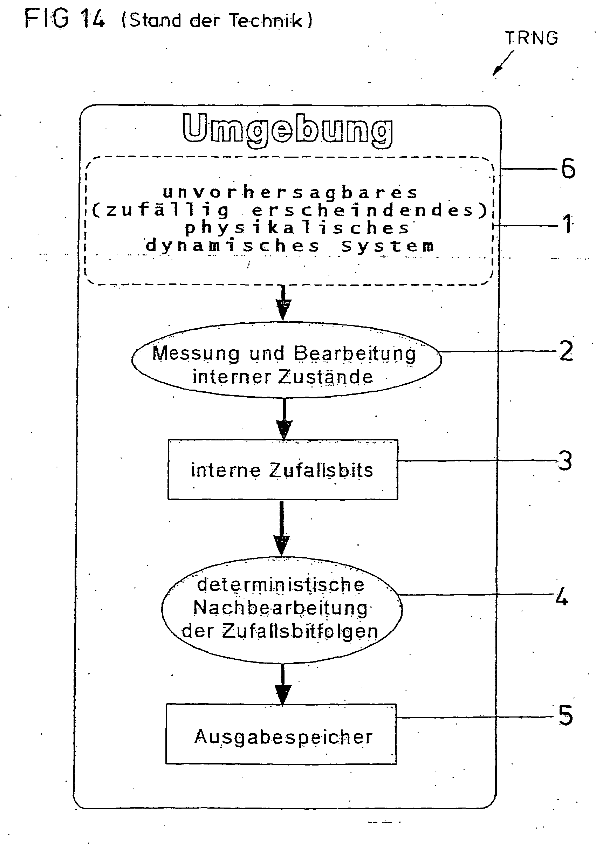

Die Figur 14 zeigt ein Modell eines physikalischen Zufallszahlengenerators TRNG in Form einer physikalischen Bitquelle. Wesentlicher Bestandteil der Quelle ist ein physikalisches dynamisches, unvorhersagbares System, die so genannte Zufallsquelle 1. Mit dieser Zufallsquelle 1 kann ein interner (zeitabhängiger) Zustand assoziiert werden. In zeitlichen Abständen wird der Wert des Zustands der Zufallsquelle 1 gemessen und bearbeitet (Werteermittlung 2) und hieraus ein oder mehrere Zufalls-Bit erzeugt (Zufalls-Bit-Erzeugung 3). Folgen dieser derart erzeugten Zufallsbits werden als interne Zufallsbits bezeichnet. Diese können anschließend einer algorithmischen Nachbearbeitung 5 unterzogen werden. Die mathematische Nachbearbeitung 5 dient im Allgemeinen dem Zweck, die Qualität der internen Zufallszahlen zu verbessern (ein Maß für die Qualität von Zufallszahlen muss hierbei noch definiert werden. Näheres hierzu im folgenden Abschnitt). Im Allgemeinen spricht man von Zufallsextraktion 5. Hierunter ist die Beseitigung von Abhängigkeiten zwischen aufeinander folgenden erzeugten Bits und der Beseitigung eines oftmals vorhandenen Bias (Ungleichverteilung der Nullen und Einsen) zu verstehen. Die hierbei erzeugten Zufallsbits werden in einem weiteren Schritt ausgegeben und gegebenenfalls in einem Ausgabespeicher hinterlegt (Zufalls-Bit-Ausgabe 5).

Wie in Figur 14 dargestellt, ist ein physikalischer Zufallszahlengenerator TRNG kein isoliertes System, sondern eingebettet in eine physikalische Umgebung 6. Es ist davon auszugehen, dass der gemessene Zustand und damit auch die erzeugten Zufallsbits von bestimmten physikalischen Größen der Umgebung 6 abhängig sind. Hierzu gehören Größen, wie z. B. die an das Gerät gelieferte Versorgungsspannung, die Umgebungstemperatur oder elektromagnetische Felder.

Anhand der Art des physikalischen Systems können verschiedene Arten von Generatoren unterschieden werden. Es können zwei wesentliche Arten der verwendeten physikalischen Systeme ausgemacht werden:
- Quantenphysikalische Systeme,
- Klassisch physikalische Systeme.

Unter einem quantenphysikalischen System versteht man ein System, welches durch die Gesetze der Quantenmechanik beschrieben wird. Nach der derzeitigen allgemeinen wissenschaftlichen Ansicht sind die hierbei auftretenden Phänomene, auf welche sich dann die Zufallserzeugung abstützt, echt zufällig. Beispiele hierfür sind Zerfallsprozesse von radioaktiven Materialien.

Klassisch physikalische Systeme hingegen werden durch die deterministischen Gesetze der (klassischen) Physik beschrieben. Dass diese Systeme trotzdem unvorhersagbar sein können, kann verschiedene Gründe haben. Für Systeme mit vielen Freiheitsgraden sind die auftretenden Wechselwirkungen innerhalb des Systems oft zu komplex um sie exakt vorherzusagen. Hinzu kommt, dass der Anfangszustand des Systems oft nicht exakt bestimmt werden kann. Dieser Umstand hat im Falle so genannter chaotischer Systeme weitere Auswirkungen. In solchen Systemen führen kleinste Änderungen im Anfangszustand, im Laufe der Zeit, zu sich stark unterscheidenden, nicht vorhersagbaren Systemzuständen.

Um eine kryptografische Bitquelle zu beurteilen, muss sie mit den Eigenschaften der vorstehend vorgestellten praktisch sicheren kryptografischen Bitquelle verglichen werden. Hierzu gehören eine statistische Beurteilung der erzeugten Bitfolgen und eine Prüfung der Möglichkeiten der so genannten Seitenkanalangriffe. Beim Einsatz von Zufallszahlengeneratoren in eingebetteten Systemen kommt diesen Angriffen tatsächlich eine große Bedeutung zu. Unter einem Seitenkanalangriff ist ein Versuch zu verstehen, die vom Generator erzeugten Zahlen vorherzusagen, bzw. ihre Erzeugung zu beeinflussen. Dies geschieht nicht-invasiv durch Ermittlung von Messwerten aus der Umgebung des Generators (passive Angriffe), bzw. durch eine gezielte Beeinflussung der Umgebung (aktive Angriffe). Eine weitere Verschärfung eines solchen Angriffs stellen die invasiven Seitenkanalangriffe dar (zum Beispiel könnte der IC aufgebohrt werden, um dort Signale zu messen). Typische passive, nicht-invasive Angriffe sind zum Beispiel die Messung der elektromagnetischen Abstrahlung oder des Stromverbrauchs des Generators.

Für die statistische Beurteilung der, durch einen Generator generierten Bitfolgen stehen verschiedene statistische Tests zur Verfügung (z. B. Killmann, Wolfgang; Schindler, Werner: "Ein Vorschlag zu: Funktionalitätsklassen und Evaluationsmethodologie für physikalische Zufallszahlengeneratoren", Bundesamt für Sicherheit in der Informationstechnik, 2001; / Marsaglia, G. Diehard: "A Battery of Tests for Randomness", URL http://stat.fsu.edu/pub/diehard/. 1996; / Ruhkin, A.L.; Sotot, J.; Nechvatal, J.; Smid, M.; Levenson, M.; Banks, D.; Vangle, M.; Leigh, S.; Vo, S.; Dray, J.: "A Statistical Test Suite for the Validation of Cryptography Random Number Generators", National Institute of Standards and Technology, Gaithersburg, MD, 2000; / Schindler, Werner: "Evaluation Criteria for True (Physical) Random Number Generators Used in Cryptographic Applictions", in: Jr., Burton S.K. (Hrsg.); Kaya Koc, Cetin (Hrsg.); Paar, Christof (Hrsg.): "Cryptographic Hardware and Embedded Systems - CHES 2002", 4th International Workshop, Redwood Shores, CA, USA, August 13-15, 2002, Revised Papers. BD. 2523. Springer, 2003 (Lecture Notes in Computer Science). - ISBN 3-540-00409-2, S. 1-2.).

Prinzipiell steht man bei der Beurteilung dieser endlichen Bitfolgen vor dem Problem der Definition des Begriffs einer zufälligen endlichen Sequenz. Nach Kolmogorov (Kolmogorov, Andrei N.: "Three approaches to the quantitative definition of information", in: "Problems in Information Transmission 1" (1965), Nr. 1) ist eine endliche Sequenz zufällig, falls sie nicht komprimiert werden kann. Dies bedeutet, dass die Länge ihrer kürzesten algorithmischen Beschreibung, bezüglich eines ausgewählten Rechnermodells, von der gleichen Größenordnung ist, wie die Länge der Sequenz selbst (dies ist die so genannte Kolmogorov-Komplexität einer Folge, mit der Turning-Maschine als Rechnermodell). Der Grundgedanke hierbei ist, dass eine Folge, welche komprimierbar ist, Regelmäßigkeiten aufweisen muss, um die Kompression zu ermöglichen. Zufällige Folgen weisen also in diesem Sinne keinerlei Regelmäßigkeiten auf. Leider lassen sich aus diesem Konzept keine direkten Tests für die Zufälligkeit von Folgen ableiten, da die Kolmogorov-Komplexität im Sinne der Berechenbarkeitstheorie nicht berechenbar ist.

Die statistischen Tests sind nur in der Lage eine Bitfolge bezüglich bestimmter Eigenschaften zu prüfen, welche man zufälligen (endlichen) Bitfolgen zuweist. Diese Eigenschaften leiten sich oft aus intuitiven Vorstellungen ab, welche man nach allgemeiner Auffassung vom Zufall hat. Tatsächlich konnte von einer Reihe Tests gezeigt werden, dass sie, von im Sinne Kolmogorov zufälligen Bitfolgen, bestanden werden (Li, Ming; Vitannyi, Paul: "An Introduction to Kolmogorov Complexity and its Applications", Springer-Verlag, 1993, - ISBN 0-387-94053-7).

Aus dem Stand der Technik sind nunmehr physikalische Zufallszahlengeneratoren in einer Vielzahl von Abwandlungen bekannt. Zu Beginn der Zufallszahlengeneratorenentwicklung wurden vorwiegend externe, d. h. nicht in ICs eingebettete Zufallszahlengeneratoren entwickelt. Hierfür steht eine größere Auswahl an verwendeten Zufallsquellen zur Verfügung. In heutigen, externen Zufallszahlengeneratoren werden eine Vielzahl von Zufallsquellen verwendet, beispielsweise radioaktive Quellen, elektronisches, thermisches Rauschen in Widerständen oder zufällige Ereignisse in der Umgebung (z. B. Zeitintervalle zwischen Tastendrucken auf einer Tastatur).

Erst in jüngster Zeit werden in kommerziellen ICs Zufallszahlengeneratoren eingebettet. Hier spielen nun die Art der Zufallsquelle, deren Oberflächengröße auf dem IC, die technische Realisierung und Miniaturisierung eine wichtige Rolle. Allerdings wird bis heute die Immunität der Zufallszahlengeneratoren gegen Seitenkanalangriffe kaum beachtet. Beispiele für realisierte eingebettete Zufallszahlengeneratoren finden sich in DE 101 17 362 A1; Cryptography Research, Inc. "Evaluation of the VIA C3 Nehemiah Random Number Generator", URL http://www.cryptography.com/resources/whitepapers/VIA_rng.pdf; Cryptography Research, Inc. "The Intel Random Number Generator" URL http://www.cryptography.com/resources/whitepapers/ IntelRNG.pdf; US 2002/0186 086 A1; US 4,855,690; DE 101 03 071 A1; Fischer, Viktor; Drutarovsky, Milos: "True Random Number Generator Embedded in Reconfigurable Hardware", in: Jr., Burton S.K. (Hrsg.); Kaya Koc, Cetin (Hrsg.); Paar, Christof (Hrsg.): "Cryptographic Hardware and Embedded Systems - CHES 2002", 4th International Workshop, Redwood Shores, CA, USA, August 13-15, 2002, Revised Papers. BD. 2523. Springer, 2003 (Lecture Notes in Computer Science). - ISBN 3-540-00409-2, S. 415-430,US 5,706,218; WO 03/081417, DE 102 13 269 A1; US 2003/ 0185392 A1; EP 1 343 073 A2; Tkacik, Thomas E.: "A Hardware Random Number Generator", in: Jr., Burton S.K. (Hrsg.); Kaya Koc, Cetin (Hrsg.); Paar, Christof (Hrsg.): "Cryptographic Hardware and Embedded Systems - CHES 2002", 4th International Workshop, Redwood Shores, CA, USA, August 13-15, 2002, Revised Papers. BD. 2523. Springer, 2003 (Lecture Notes in Computer Science), - ISBN 3-540-00409-2, S. 450-453.

Die Erfindung geht von einem sogenannten Inverterketten-Zufallszahlengenerator aus, wie er gemäß dem Stand der Technik in unterschiedlichster Ausführung beschrieben ist. Beispielhaft wird auf die DE 102 13 269 A1 verwiesen.

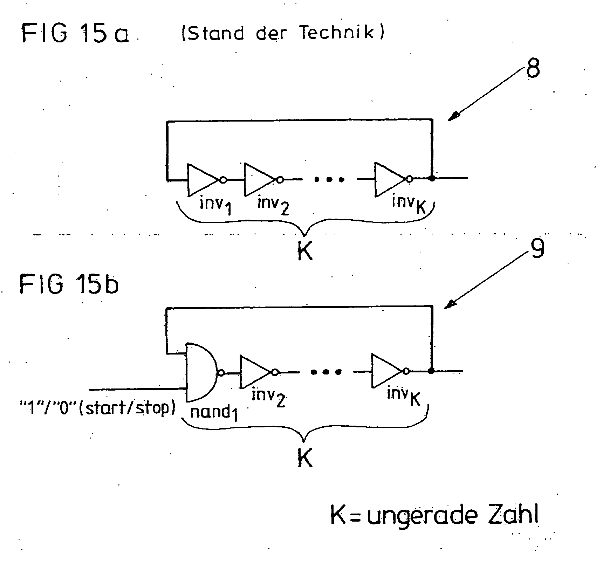

Grundbaustein dieser Zufallszahlengeneratoren ist ein so genannter Ringoszillator 8. Er besteht aus der seriellen Verbindung von einer ungeraden Anzahl K von Invertern inv₁, inv₂, ...inv_{K} (logischen NOT-Gattern), wobei der Ausgang des letzten Inverters inv_{K} mit dem Eingang des ersten Inverters inv₁ verbunden ist (siehe Fig. 15a). Durch die Verzögerungszeiten der einzelnen Inverter inv₁, inv₂, .. inv_{K} kommt es nur bei einer ungeraden Anzahl K von Gattern inv₁, inv₂, ...inv_{K} zu einer periodischen Schwingung.

Um diese Schwingung zu starten bzw. zu stoppen, kann der erste Inverter inv₁ durch ein NAND-Gatter nand₁ mit Steuereingang start/stop ersetzt werden (siehe Fig. 15b). Wird dieser Steuereingang start/stop auf logisch Eins ("1") gesetzt, beginnt der Ringoszillator 9 zu schwingen.

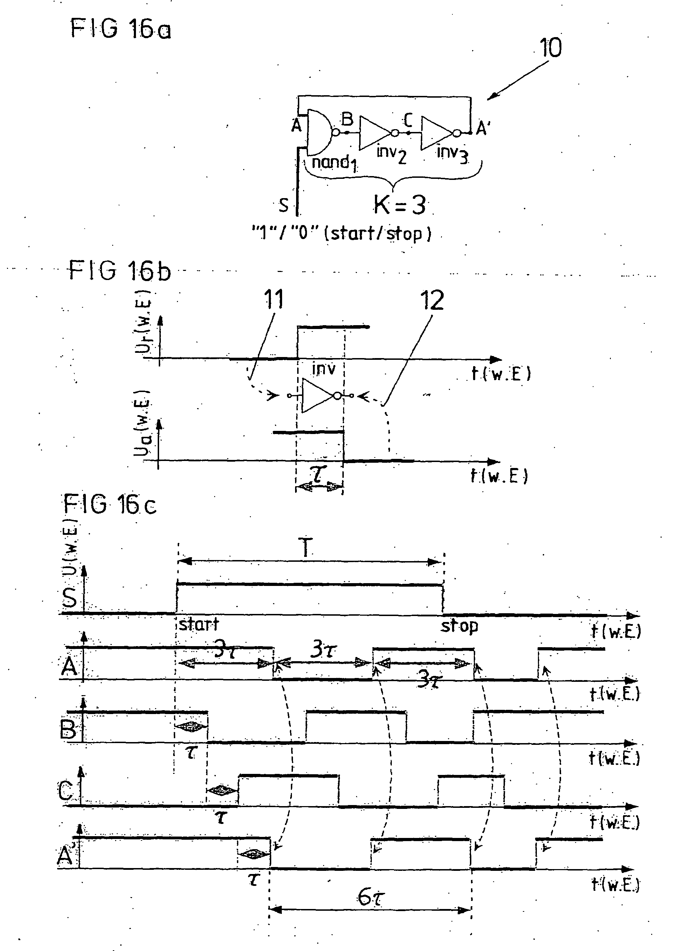

Fig. 16a zeigt einen Ringoszillator 10 für K=3 mit zwei Invertern inv₂, inv₃ und einem NAND-Gatter nand₁. Fig. 16b zeigt einen idealisierten Signalverlauf am Eingang 11 und Ausgang 12 eines Inverters inv, dessen Verzögerungszeit τ beträgt. Nimmt man an, das die Gatter nand₁, inv₂, inv₃ im Ringoszillator 10 nach Fig. 16a ein derartig idealisiertes Verhalten aufweisen, so zeigt Fig. 16c den idealisierten Signalverlauf des Ringoszillators 10 gemäß der Figur 16a an den Punkten S, B, C und A=A', nachdem der Eingang S für eine Laufzeit T auf "1" gesetzt wurde.

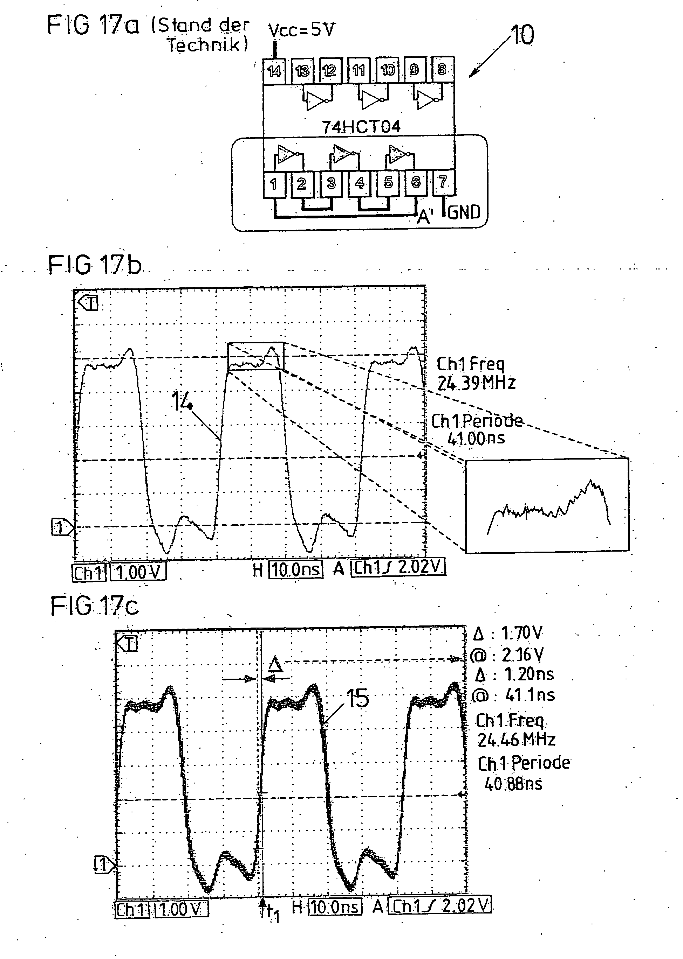

Für eine technische Realisierung des Ringoszillators 10 mit K=3 mit dem CMOS-Baustein 74HCT04 (ohne Eingangs-NAND-Gatter, Fig. 17a), ist ein mit einem Oszilloskop aufgenommener Signalverlauf 14 am Punkt A' in Fig. 17b darstellt. Wie sich aus der Ausschnittsvergrößerung des Signalverlaufs 14 (in Fig. 17b) ergibt, wird durch thermische Bewegung der Elektronen in den Leitungen des Schaltkreises 74HCT04 ein thermisches Rauschsignal aufaddiert. Fig. 17c zeigt die Hüllkurve 15 des verrauschten Schwingungssignals 14 beobachtet über ein längeres Zeitintervall t. Wie zu bemerken ist, führt das Rauschen in den Flanken des Signals 14 zu einer früheren oder späteren Überschreitung des Entscheidungspegels relativ zum rauschfreien Signal. Diese zeitlich zufällige Verschiebung der Flanken wird als Jitter bezeichnet. Die Differenz zwischen den maximal möglichen Flankenverschiebungen, beobachtet bezüglich eines fixen Zeitpunktes t₁ (Fig. 17c), ist mit dem Bezugszeichen Δ bezeichnet. Der Betrag dieser Differenz Δ nimmt zu, je weiter die Flanke von dem Bezugszeitpunkt t₁ entfernt ist. Dieses Phänomen ist als Jitter-Akkumulation bekannt.

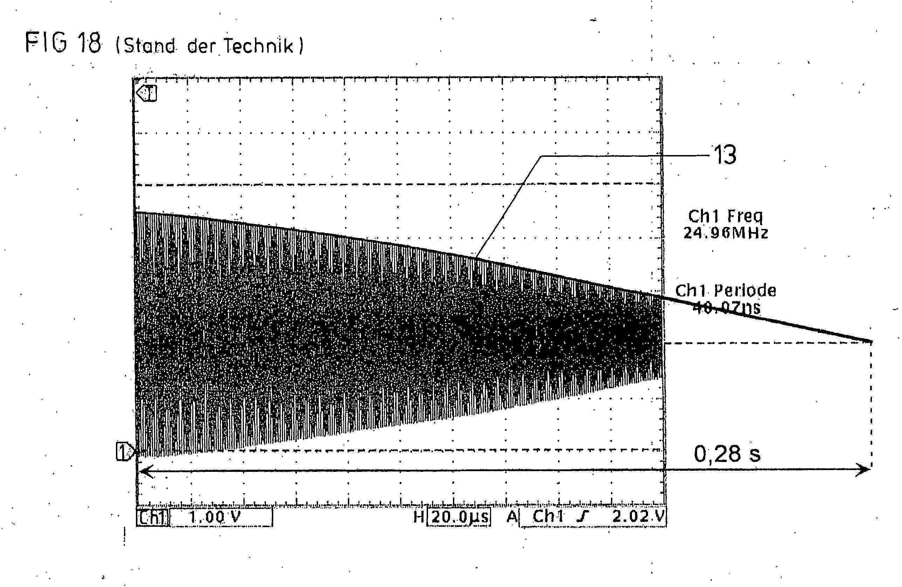

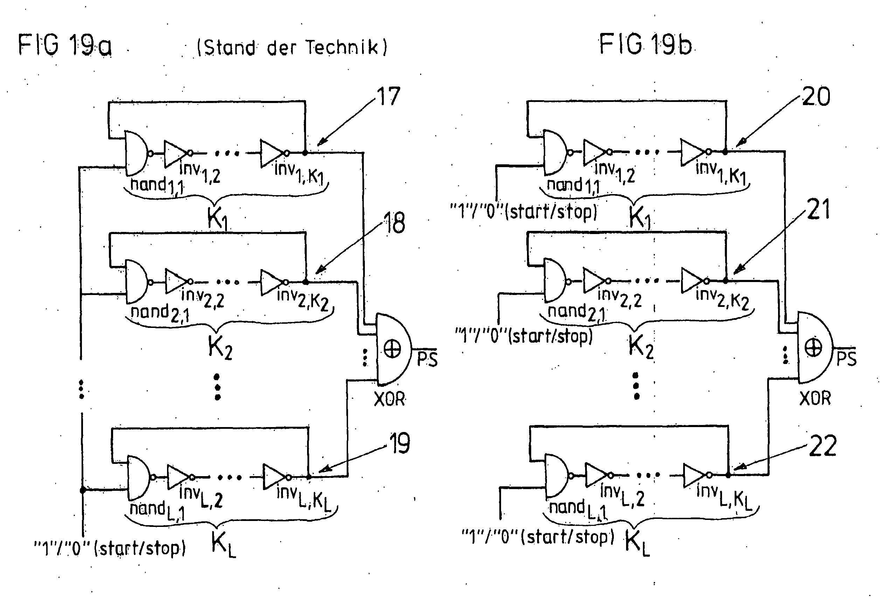

In Fig. 18 ist ein Schwingungssignal 14 des Ringoszillators 10 aus Fig. 17a, mit einer Frequenz f von ca. 25 MHz, 512 mal über die Dauer von 0,2 s gemittelt, dargestellt. Die Einhüllende 13 dieses gemittelten Signals zeigt den Verlauf der Autokorrelation für verschiedene zeitliche Abstände vom Triggerpunkt an. Wie man aus Fig. 18 sehen kann, wird das Signal 14 erst nach ca. 0,28 s durch akkumulierten Jitter vollständig dekorreliert.
Dies bedeutet, dass die erzeugten Bits erst bei einer Abtastungsrate ν von 3 Hz (oder kleiner) dekorreliert wären und somit für eine Zufallsbitquelle genutzt werden könnten. Um die maximal mögliche Rate νₘₐₓ der erzeugten Zufallsbits zu erhöhen, kann man mehrere Ringoszillatoren mit verschiedenen Perioden (d.h. mit verschiedenen Werten für K) kombinieren. Figur 19 zeigt zwei Ausführungsbeispiele für Schaltungsanordnungen basierend auf einer Anzahl L von Ringoszillatoren 17, 18, 19, 20, 21, 22. Hierbei wird jeweils eine Paritätsprüfung (sogenanntes XORing) der Ausgänge durchgeführt. Konkret bedeutet dies, dass die Ausgänge der jeweiligen Ringoszilatoren 17, 18, 19, 20, 21, 22 mit den Eingängen eines XOR-Gatters xor verbunden werden, so dass an dessen Ausgang genau dann ein "1"-Signal erzeugt wird, wenn an den Ausgängen der Ringoszilatoren 17, 18, 19, 20, 21, 22 eine ungerade Anzahl von logischen "1" anliegt. Eine gerade Anzahl von logischen "1" wird am Ausgang des XOR-Gatters xor ein "0"-Signal erzeugen. Deshalb wird das Signal am Ausgang des XOR-Gatters xor nachfolgend als Paritätssignal PS bezeichnet.

Die beiden Schaltungen gemäß den Figuren 19a bzw. 19b unterscheiden sich lediglich in der Beschaffung der start/stop-Eingänge der Ringoszillatoren 17, 18, 19, 20, 21, 22. Bei der ersten Ausführungsvariante gemäß der Fig. 19a werden die start/stop-Eingänge der einzelnen Ringoszillatoren 17, 18, 19 gemeinsam angesteuert. Die zweite in Fig. 19b dargestellte Möglichkeit besteht darin, die Eingänge separat anzusteuern, um damit die Anfangsphasen der einzelnen Schwingungssignale gegeneinander zu verschieben.

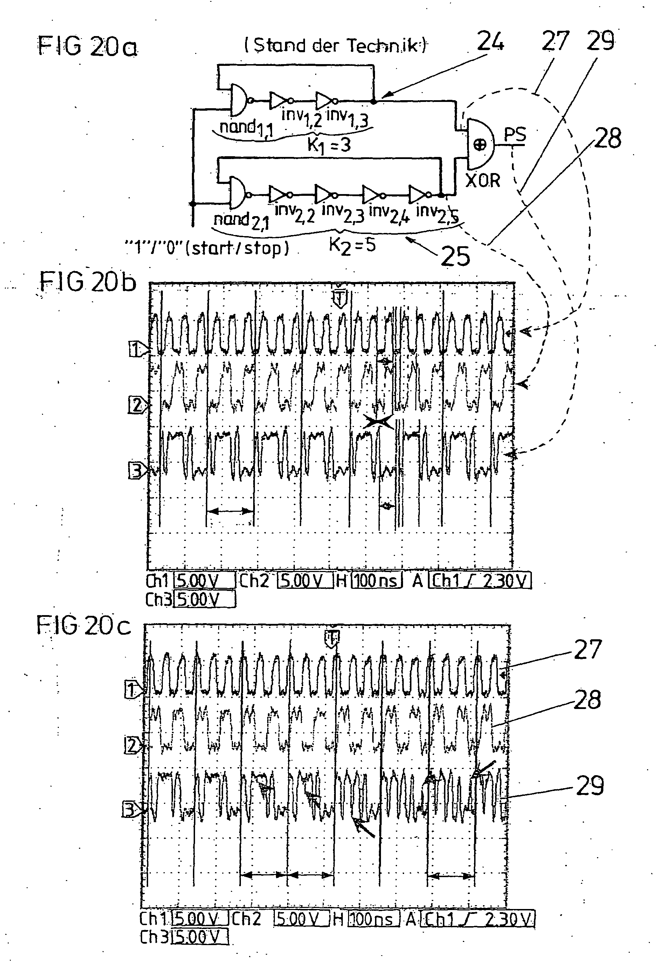

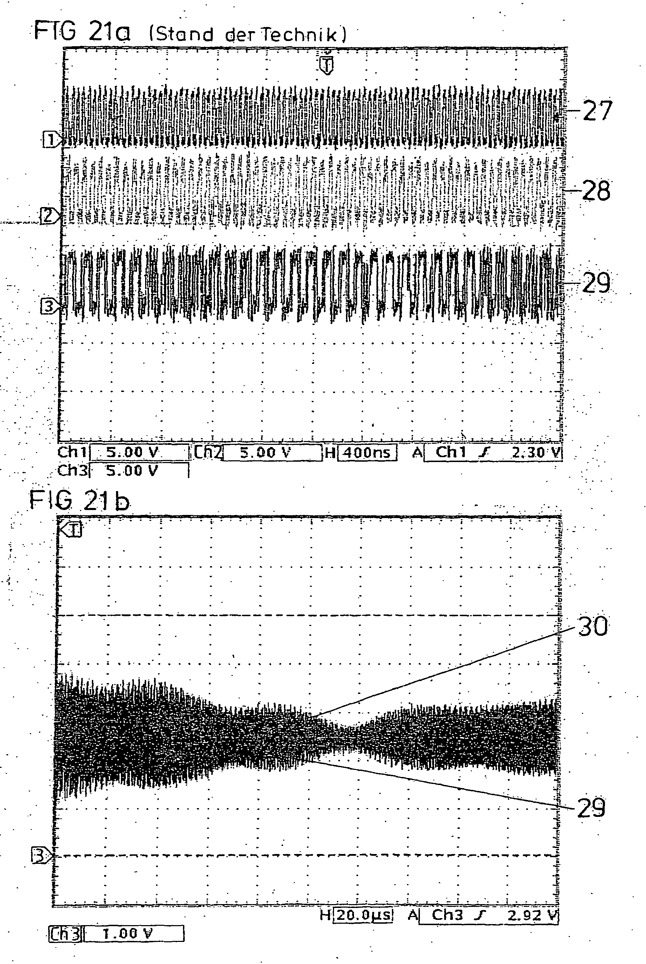

In Fig. 20a ist eine Schaltung mit Paritätsprüfung von zwei Ringoszillatoren 24, 25 mit gemeinsamem start/stop Signal dargestellt. Wie in Fig. 20b und 20c zu sehen ist, bleibt die Periode P des Paritätssignals PS, 29 konstant. Durch langsame Phasenverschiebungen der einzelnen Ringoszillator-Signale 27, 28 ändert sich der Signalverlauf 29 des Paritätssignals PS, innerhalb einer Periode P über größere Zeitabstände, was in Fig. 21a deutlich zu sehen ist. Die Einhüllende 30 des Paritätssignals PS, 29 über einen Zeitraum von ca. 0,2.s in Fig. 21b zeigt eine variablere Autokorrelation, die kleiner ist, als die Autokorrelation der einzelnen Komponenten (siehe Fig. 18). Diese Paritätsprüfung von Ringoszillatoren wird in vielen Realisierungen von Zufallszahlengeneratoren benutzt. Mit dieser Technik kann man die Korrelationen nicht komplett entfernen und daher wird eine zusätzliche, die Rate herabsetzende, deterministische Nachbearbeitung unvermeidbar.

Die Aufgabe der Erfindung besteht nunmehr darin, einen Zufallszahlengenerator der gattungsgemäßen Art sowie ein Verfahren zur Erzeugung einer Zufallszahlenfolge, wie es aus dem Stand der Technik bekannt ist, derart auszuführen bzw. weiterzubilden, dass eine deterministische Nachbearbeitung nicht mehr notwendig ist.

Diese Aufgabe wird durch einen Zufallszahlengenerator mit den Merkmalen des Patentanspruchs 15 sowie durch ein Verfahren mit den Merkmalen des Patentanspruchs 1 gelöst.

Vorteilhafte Ausführungen und Weiterbildungen der Erfindung sind in den Unteransprüchen angegeben.

Die Erfindung geht von einem Verfahren zur Erzeugung von Zufallszahlen aus, bei dem von wenigstens zwei Ringoszillatoren oszillierende digitale Ausgangssignale gleicher oder unterschiedlicher Periodizität erzeugt werden und bei dem ein einen logischen Zustand, nämlich logisch "0" oder "1", darstellendes externes Paritätssignal erzeugt wird, welches genau dann den logischen Zustand "1" einnimmt, wenn eine ungerade Anzahl der Äusgangssignale den logischen Zustand "1" hat, und ansonsten den logischen Zustand "0" einnimmt. Erfindungsgemäß ist vorgesehen, dass das externe Paritätssignal auf jeweils einen externen Paritätseingang der jeweiligen Ringoszillatoren rückgekoppelt wird. Wie aus dem Stand der Technik bekannt ist kann das externe Paritätssignal zur Erzeugung von Zufallsbits verwendet werden, indem es abgetastet wird. Aufgrund der Rückkopplung des Paritätssignals auf den (externen Paritäts-) Eingang des jeweiligen Ringoszillators wird die Autokorrelation des Paritätssignals gegenüber dem aus dem Stand der Technik bekannten Verfahren ohne Rückkopplung signifikant reduziert. Daher kann mit dem erfindungsgemäßen Verfahren die Rate der erzeugten Zufallsbits deutlich erhöht werden.

Ein Zufallszahlengenerator gemäß der Erfindung umfasst in entsprechender Weise wenigstens zwei vorzugsweise aus unabhängig freischwingenden rückgekoppelten Inverterketten mit einer ungeraden Anzahl an hintereinandergeschalteten Invertern aufgebaute Ringoszillatoren, welche die vorstehend genannten oszillierenden digitalen Ausgangssignale gleicher oder unterschiedlicher Periodizität erzeugen, sowie erste, vorzugsweise durch ein Exklusiv-ODER-Gatter gebildete, Paritätssignalerzeugungsmittel, welche das vorerwähnte externe Paritätssignal erzeugen. Erfindungsgemäß sind beispielsweise durch Exklusiv-ODER-Gatter gebildete Rückkoppelmittel vorgesehen, welche dieses externe Paritätssignal auf den jeweils einen externen Paritätseingang der jeweiligen (aus Inverterketten gebildeten) Ringoszillatoren zurückkoppeln.

Erfindungsgemäß ist in einer bevorzugten Ausführungsvariante vorgesehen, dass zu jedem Ringoszillator jeweils ein einen vorgegebenen logischen Zustand (z.B. "1") darstellendes internes Paritätssignal erzeugt wird, wenn entweder das Ausgangssignal des jeweiligen Ringoszillators oder das auf den externen Paritätseingang des jeweiligen Ringoszillators rückgekoppelte Signal einen vorgegebenen logischen Zustand (z.B. "1") einnimmt. Diese internen Paritätssignale können wiederum durch weitere Paritätssignalbildung der vorstehend beschriebenen Art in ein weiteres Paritätssignal überführt werden, welches in vorstehend beschriebener Weise zur Erzeugung von Zufallsbits verwendet werden kann, indem es abgetastet wird. Durch diese weitere Paritätsbildung ergibt sich ein Signal, dessen Autokorrelation gegenüber dem externen Paritätssignal noch einmal signifikant reduziert ist. Damit einhergehend kann auf diese Weise die mögliche Abtastrate zur Erzeugung der Zufallsbits noch einmal deutlich erhöht werden.

Der erfindungsgemäße Zufallszahlengenerator umfasst demgemäss zur Erzeugung der inneren Paritätssignale entsprechende Paritätssignalerzeugungsmittel. Diese umfassen vorzugsweise Exklusiv-ODER-Gatter mit jeweils einem externen Paritätseingang und einem Ausgangssignal-Eingang. An dem externen Paritätseingang liegt ein vom externen Paritätssignal abgeleitetes Signal, z.B. das Paritätssignal selbst oder ein Signal, dessen Erzeugung nachfolgend im Detail beschrieben wird, an. An dem Ausgangssignal-Eingang liegt das jeweilige Ausgangssignal des jeweiligen Ringoszillators an. Zur Erzeugung des weiteren Paritätssignals umfasst der erfindungsgemäße Zufallszahlengenerator weitere Paritätssignalerzeugungsmittel, welche das einen logischen Zustand "0" oder "1" darstellende weitere Paritätssignal erzeugen, wenn eine ungerade Anzahl der internen Paritätssignale einen vorgegebenen logischen Zustand (z.B. "1") einnimmt. Auch diese Mittel umfassen in entsprechender Art und Weise vorzugsweise ein Exklusiv-ODER-Gatter (XOR-Gatter) an dessen Eingängen die internen Paritätssignale anliegen.

Wie vorstehend bereits erwähnt wurde, kann insbesondere bei aus Inverterketten gebildeten Ringoszillatoren ein Startproblem auftreten. Um dieses Problem zu vermeiden sind erfindungsgemäß bei dem Zufallszahlengenerator gemäß der Erfindung Startmittel vorgesehen, welche ein Startsignal (z.B. eine logische "1") erzeugen und einem start/stop-Eingang wenigstens eines der Ringoszillatoren zuführen, so dass dieser zur Oszillation angeregt wird. Hierzu weist dieser beispielsweise anstelle eines eingangsseitigen Inverters ein NAND-Gatter mit zwei Eingängen auf. Der eine Eingang und der Ausgang dieses NAND-Gatters sind anstelle des Eingangs und des Ausgangs des herausgenommenen Inverters mit der verbleibenden Inverterkette verschaltet. Der andere Eingang bildet den vorerwähnten start/stop-Eingang zum Zuführen des Startsignals.

Es können grundsätzlich sämtliche Ringoszillatoren separat über entsprechende start/stop-Eingänge gestartet werden. Es hat sich jedoch in vielen Fällen als günstig erwiesen, wenn alle Ringoszillatoren, vorzugsweise gleichzeitig, mit Hilfe desselben Startsignals (z.B. logisch "1") zur Oszillation angeregt werden. Zu diesem Zweck sind beispielsweise alle Ringoszillatoren anstelle eines eingangsseitigen Inverters jeweils mit einem NAND-Gatter versehen, deren start/stop-Eingänge zum Zuführen des Startsignals (z.B. einer logischen "1") miteinander verbunden sind.

Je nach Konstellation kann auch jetzt noch ein Startproblem auftreten. Dieses Startproblem lässt sich dadurch beseitigen, dass wenigstens einem externen Paritätseingang ein Inverter vorgeschaltet ist, dem das externe Paritätssignal zugeführt wird. Zum einen tritt durch diesen Inverter eine Verzögerung des Signals an diesem externen Paritätseingang und zum anderen tritt eine Polaritätsumkehr des Signals an diesem externen Paritätseingang mit vorgeschaltetem Inverter ein. Letzteres führt zu einer Polaritätsumkehr am Eingang des entsprechenden Ringoszillators und damit zu einem Ingangsetzen der Oszillation in diesem Ringoszillator. In der Folge werden auch die anderen angeschlossenen Ringoszillatoren zur Schwingung angeregt.

In bestimmten Anwendungsfällen hat es sich als vorteilhaft herausgestellt, wenn allen externen Paritätseingängen Inverterketten mit einer unterschiedlichen Anzahl an Invertern vorgeschaltet sind, denen das externe Paritätssignal zugeführt wird. Eine Schwingung der Schaltungsanordnung kommt dann zustande, wenn die Summe der ein ungeradzahliges Vielfaches einer Verzögerungszeit eines Gatters (Inventer, NAND-Gatter, XOR-Gatter) betragenden Periodizität eines der von einem ersten der Ringoszillatoren erzeugten Ausgangssignals und der ein Vielfaches der Verzögerungszeit betragenden Verzögerungszeitdauer des externen Paritätssignals an dem externen Paritätseingang des ersten der Ringoszillatoren ein ungeradzahliges Vielfaches der Verzögerungszeit ist und wenn die Summe der ein ungeradzahliges Vielfaches der Verzögerungszeit betragenden Periodizität eines der von einem zweiten der Ringoszillatoren erzeugten Ausgangssignals und der ein Vielfaches der Verzögerungszeit betragenden Verzögerungszeitdauer des externen Paritätssignals an dem externen Paritätseingang des zweiten der Ringoszillatoren ein geradzahliges Vielfaches der Verzögerungszeit ist.

Wie vorstehend bereits erwähnt wurde können sowohl das externe Paritätssignal als auch das weitere Paritätssignal zur Erzeugung von Zufallsbits verwendet werden. Der Zufallszahlengenerator gemäss der Erfindung kann daher Abtastmittel aufweisen, welche das externe Paritätssignal zur Erzeugung von Zufallsbits mit einer vorgegebenen Rate abtasten und/oder Abtastmittel, welche das weitere Paritätssignal zur Erzeugung von Zufallsbits mit einer vorgegebenen Rate abtasten.

Die maximale Abtastrate kann weiter erhöht werden, wenn mehrere Zufallszahlengeneratoren der vorstehend beschriebenen Art kombiniert werden. Ausgehend von Zufallszahlengeneratoren, welche externe, insbesondere abgetastete, Paritätssignale erzeugen und/oder welche weitere, insbesondere abgetastete, Paritätssignale erzeugen lassen sich durch nochmalige bzw. wiederholte Paritätsbildung aus diesen Paritätssignalen (es sind beliebige Variationen von Paritätssignalbildungen möglich) Zufallszahlengeneratoren bilden bei denen das zur Zufallszahlenerzeugung vorgesehene (Super-)Paritätssignal eine nahezu beliebig reduzierte Autokorrelation aufweist.

Die weitere Zufallszahlengeneration erfordert eine Abtastung. Hierbei spielt es keine Rolle, ob die externen Paritätssignale oder die weiteren Paritätssignale oder sonstige Paritätssignale niederer Ordnung zur Erzeugung von Zufallsbits mit einer vorgegebenen Rate synchron abgetastet werden oder das (Super-) Paritätssignal höchster Ordnung zur Erzeugung von Zufallsbits mit der vorgegebenen Rate abgetastet wird.

Die Abtastung kann in zeitlich konstanten Abständen erfolgen, erfindungsgemäß ist jedoch auch vorgesehen, eine Abtastung in zufälligen, nicht uniformen Abtastintervallen durchzuführen. Beispielsweise lässt sich eine zufällige Abtastung erreichen, wenn die Abtastung zu einem Zeitpunkt durchgeführt wird, wenn ein von einem der vorstehend beschriebenen Zufallsgeneratoren zufällig erzeugtes Zufallsbit einen vorbestimmten logischen Zustand (z.B. "1") einnimmt.

Die Abtastung kann beispielsweise mittels eines D-Flip-Flops erfolgen, welches in einem Takt von einem Taktgeber, insbesondere von einem astabilen Multivibrator (bei zeitlich konstanten Abtastintervallen) oder von einem rückgekoppelten Ringoszillatoren der vorstehend beschriebenen Art (bei zeitlich zufälligen Abtastintervallen), angesteuert wird.

Die Erfindung wird nunmehr anhand der Zeichnungen näher beschrieben. Es zeigen:
Figur 1 Ringoszillatoren mit rückgekoppeltem Paritätssignal.
Figur 2 ein Beispiel des Startproblems bei rückgekoppelten Ringoszillatoren:
   a) vor dem Start;
   b) nach dem Start.
Figur 3 eine Lösung des Startproblems aus Figur 2;
   a) vor dem Start;
   b) nach dem Start.
Figur 4 den Signalverlauf des Paritätssignals PS in der Schaltung aus Fig. 3 in einer Zeitspanne von:
   a) 10ns;
   b) 40ns;
   c) 200ns;
   d) 400ns;
   e) 1000ns;
   f) 2000ns.
Figur 5 ein gemitteltes Paritätssignal der Schaltung aus Fig. 3.
Figur 6 ein allgemeines Schaltbild von rückgekoppelten Ringoszillatoren (RRO).
Figur 7 einen Schaltkreis von RRO (4; 1, 3, 4, 5; 3, 2, 1, 0).
Figur 8 interne Paritätssignale des RRO (4; 1, 3, 4, 5; 3, 2, 1, 0) nach der Figur 7 in den Punkten P₁, P₂, P₃ und P₄.
Figur 9 einen Zufallsbitgenerator realisiert mit RROs.
Figur 10 ein Beispiel eines Zufallszahlengenerators mit RRO (4; 1, 3, 4, 5; 3, 2, 1, 0).
Figur 11 einen Zufallszahlengenerator mit einer Anzahl N RROs und abgetastetem Superparitätssignal.
Figur 12 einen Zufallszahlengenerator mit einer Anzahl N abgetasteten RROs und abgetastetem Superparitätssignal.
Figur 13 einen Zufallszahlengenerator mit einer Anzahl N synchronisiert, abgetasteten RROs und abgetastetem Superparitätssignal.
Figur 14 ein Modell eines physikalischen Zufallsgenerators (Stand der Technik).
Figur 15 Ring-Oszillatoren gemäß dem Stand der Technik
   a) Inverterketten-Ring Oszillator;
   b) Inverterketten-Ring Oszillator mit Steuereingang.
Figur 16 ein Beispiel für die Funktionsweise eines Ring-Oszillators nach dem Stand der Technik
   a) einen Ring Oszillator für K=3 (Stand der Technik);
   b) eine idealisierte Verzögerung eines Inverters;
   c) einen Verlauf eines Schwingsignals.
Figur 17 ein Beispiel für die praktische Realisierung des Ring-Oszillators nach Figur 16
   a) Realisierung eines Ring Oszillator für K=3 mit dem Baustein 74HCT04,
   b) Verlauf seines Schwingungssignals mit aufaddiertem thermischen Rauschen;
   c) Hüllkurve des verrauschten Schwingungssignals.
Figur 18 ein gemitteltes Schwingungssignal des Ringoszillators aus Fig. 17a.
Figur 19 ein Beispiel für die Durchführung einer sogenannten Paritätsprüfung (Stand der Technik)
   a) eine Schaltung für die Paritätsprüfung von L Ringoszillatoren mit gemeinsam angesteuertem start/stop-Signal;
   b) eine Schaltung für die Paritätsprüfung von L Ringoszillatoren mit getrennt angesteuertem start/Stopp-Signal.
Figur 20 ein Beispiel für die praktische Durchführung der Paritätsprüfung nach der Fig. 19a
   a) ein Beispiel für eine Schaltung für Paritätsprüfung von zwei Ringoszillatoren mit gemeinsam angesteuertem start/Stopp-Signal
   b) Signale der einzelnen Komponenten und Verlauf des Paritätssignals.
   c) Signale der einzelnen Komponenten und Verlauf des Paritätssignals.
Figur 21 ein Beispiel für die praktische Durchführung der Paritätsprüfung nach der Figur 19a
   a) Signale der einzelnen Komponenten und Verlauf des Paritätssignals;
   b) ein gemitteltes Paritätssignal der Schaltung aus Fig. 20a.
Figur 22 einen RRO mit neutralisiertem Restbias

Die grundsätzliche Idee der Erfindung besteht, wie vorstehend dargelegt wurde, in der Rückkopplung des Paritätssignals auf die Eingänge der einzelnen Ringoszillatoren.

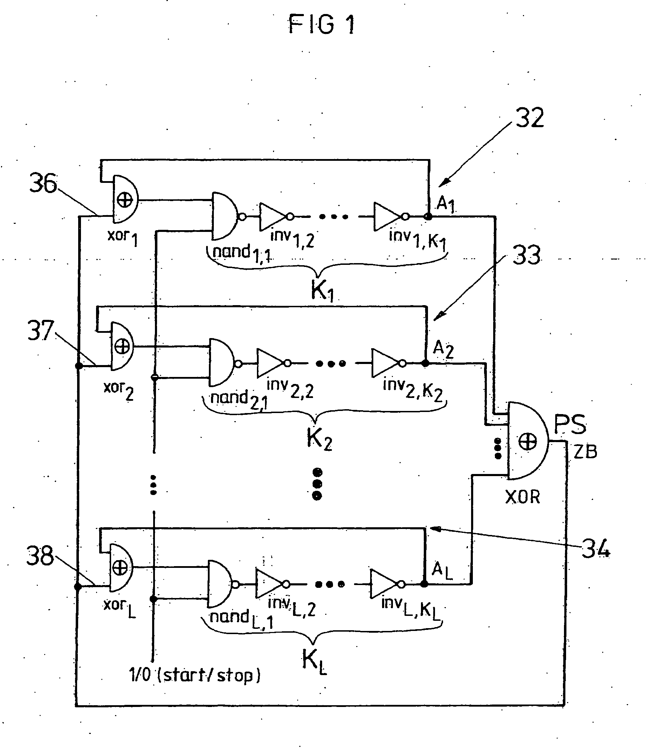

Die Fig. 1 zeigt ein erstes Ausführungsbeispiel eines erfindungsgemäßen Zufallsgenerators basierend auf einer Anzahl L von Ringoszillatoren 32, 33, 34, deren Ausgänge entsprechenden Eingängen eines XOR-Gatters xor zugeführt werden, an dem ein Paritätssignal PS gebildet wird.

Wie Fig. 1 zeigt, wird die Zuführung des rückgekoppelten Paritätssignals PS auf die einzelnen Eingänge der Ringoszillatoren 32, 33, 34 durch eine Anzahl logischer XOR-Gatter xor₁, xor₂, ... xor_{L} erreicht. Der jeweilige Eingang, an dem das Paritätssignal PS anliegt, soll als externer Paritätseingang 36, 37, 38 bezeichnet werden.

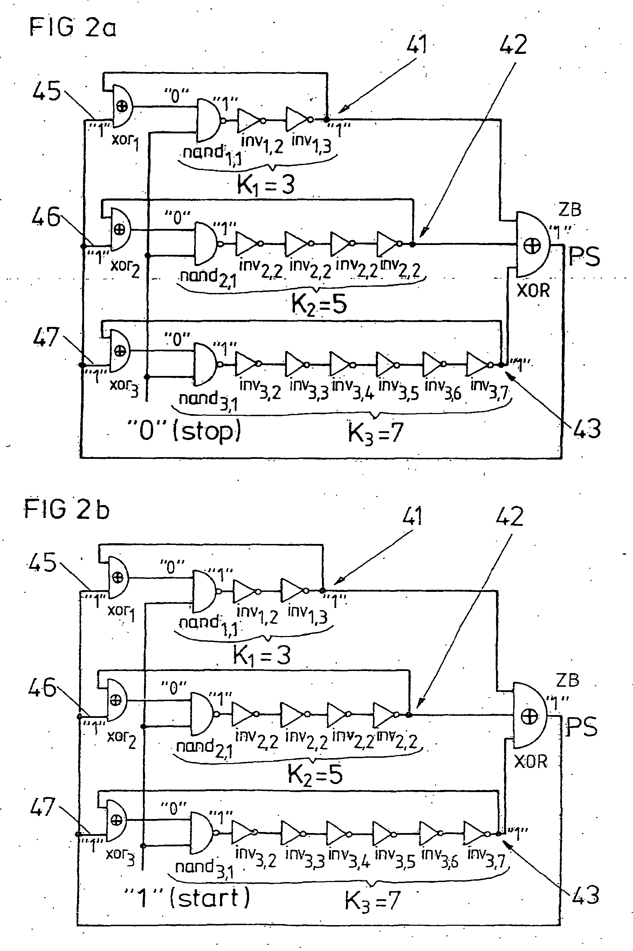

Wichtig ist zu bemerken, dass nicht für alle Wert-Kombinationen der Parameter L, K₁, ..., K_{L} eine Schwingung dieser Schaltung zustande kommt, wie das Beispiel in Fig. 2 für L=3, K1=3, K2=5 und K3=7 zeigt und wie nachfolgend im Detail beschrieben wird.

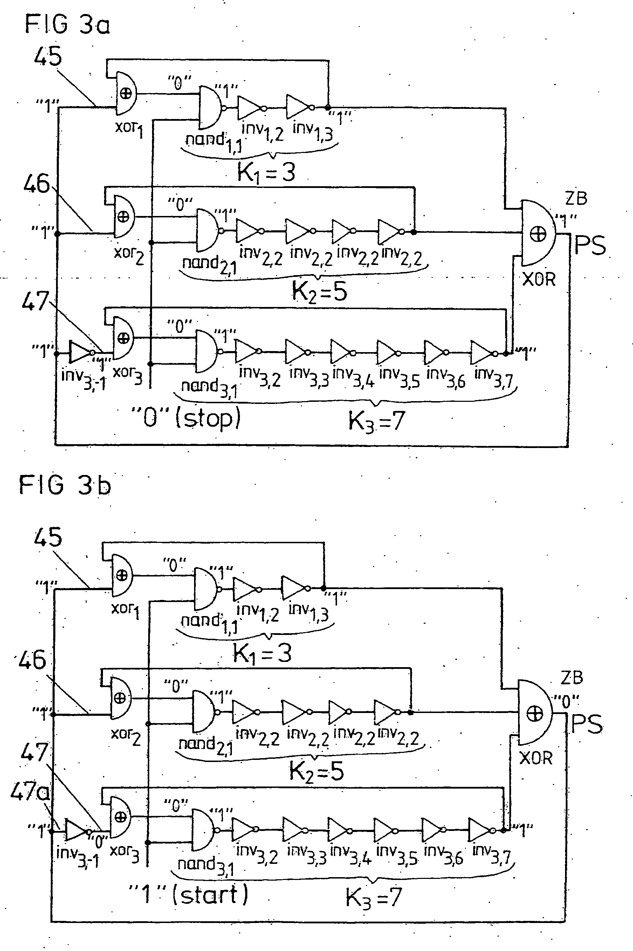

In Fig. 2a ist der logische Zustand der ausgeschalteten Schaltung dargestellt. Fig. 2b zeigt den Zustand der Schaltung nach dem Einschalten (d.h. nach dem Setzen des Start/Stop-Signals auf logisch "1"). Wie zu bemerken ist, befindet sich die Schaltung immer noch in einem statischen (nicht schwingenden) Zustand, da sich alle Ausgänge der NAND-Gatter nand_{i,1} für i=1, 2, 3 nicht geändert haben. Dieses Startproblem kann durch Einfügen eines weiteren Inverters inv_{3, -1} vor dem externen Paritätseingang 47 des XOR-Gatters behoben werden (siehe Fig. 3).

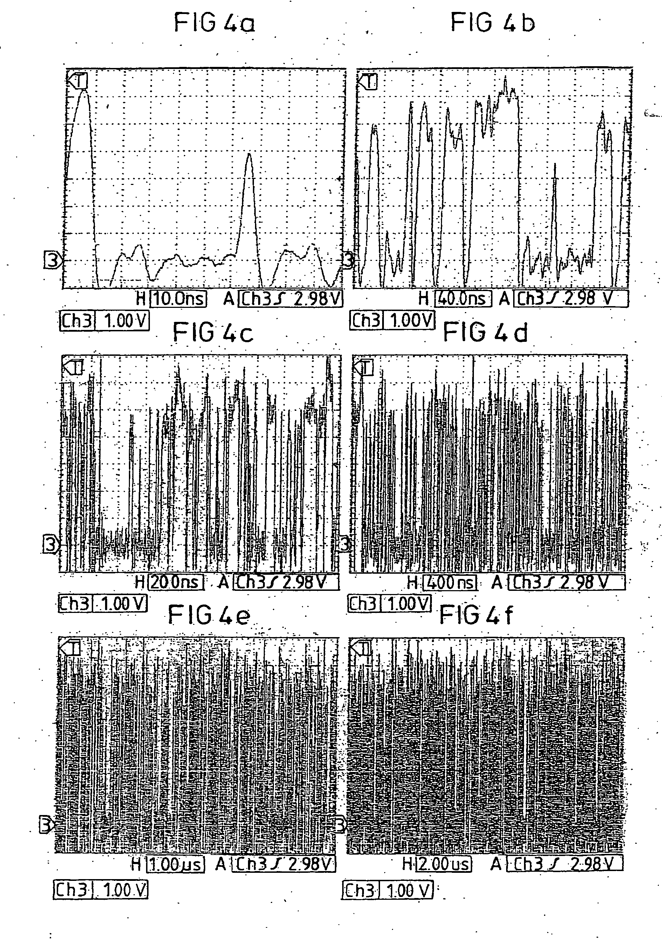

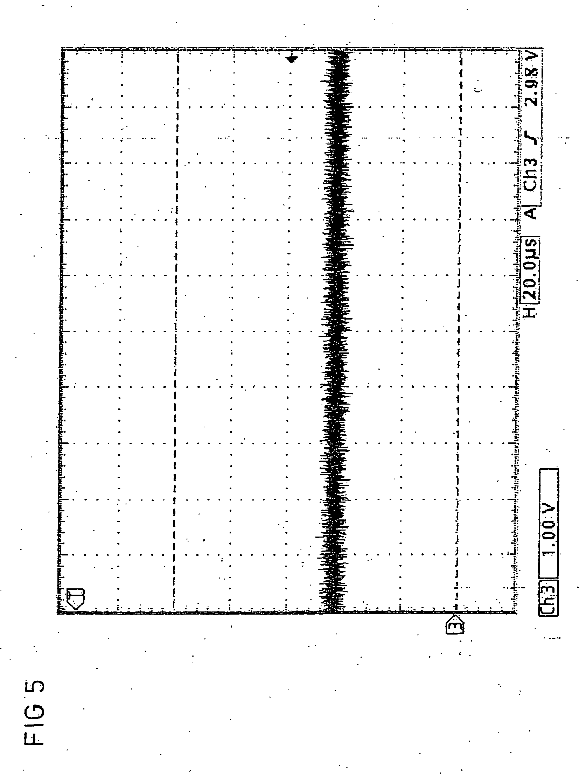

Das Paritätssignal PS dieser nun schwingenden Schaltung ist in Fig. 4 für verschiedene Zeitintervalle dargestellt. Es ist eindeutig zu sehen, dass die Rückkopplung für eine geeignete (schwingende) Parameterkombination zu einer sehr unregelmäßigen Form des Paritätssignals PS führt. Das gemittelte Paritätssignal PS zeigt eine sehr geringe und konstante Autokorrelation (siehe Fig. 5). Im Vergleich zu Fig. 21b ist dies eine signifikante Verbesserung, die es erlaubt, die Rate ν der erzeugten Zufallsbits deutlich zu erhöhen.

Um das Startproblem generell zu lösen, und um zusätzliche Jitter-Akkumulation einzuführen, werden vor den XOR-Gattern xorᵢ i=1, ...,L, Ketten von Invertern inv_{i, -j}, i=1...L, j=1, ...Mᵢ eingeführt. Die Länge der einzelnen Ketten M₁,...M_{L} variiert hierbei. Um sicher zu stellen, dass das Start/Stop-Problem nicht auftritt, müssen die Parameter Mᵢ und Kᵢ speziell gewählt werden. Es muss gelten, dass mindestens ein Paar i, j mit i, j, ∈ {1, ...L} x (1,..., L} existiert, so dass eine der beiden Summen Mᵢ + Kᵢ und Mⱼ+ Kⱼ ungerade und die andere gerade ist.

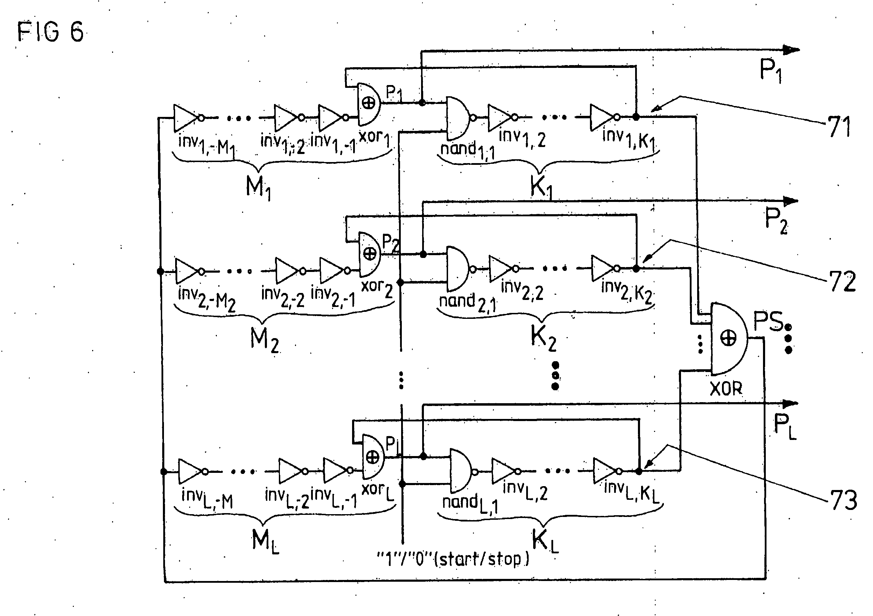

Fig. 6 zeigt ein generelles Schaltbild mit rückgekoppeltem Paritätssignal PS. Diese Schaltung soll im Folgenden als rückgekoppelter Ring-Oszillatoren RRO bezeichnet werden. Die Signale an den Ausgängen P₁ bis P_{L}, der XOR-Gatter xor₁ bis xor_{L}, prüfen die Parität ihrer Eingangssignale und werden daher als interne Paritätssignale bezeichnet. Zur Unterscheidung soll das Paritätssignal PS am Ausgang des XOR-Gatters XOR als externes Paritätssignal bezeichnet werden.

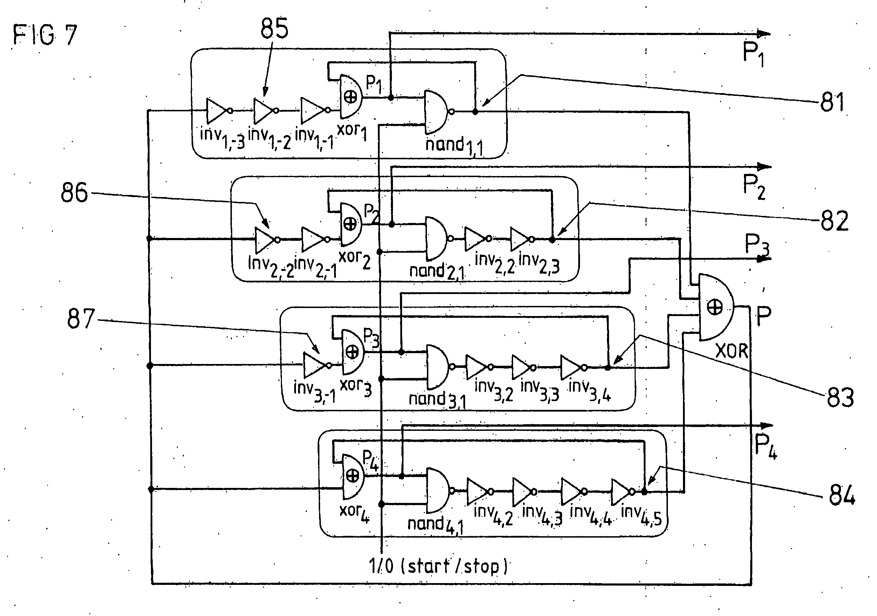

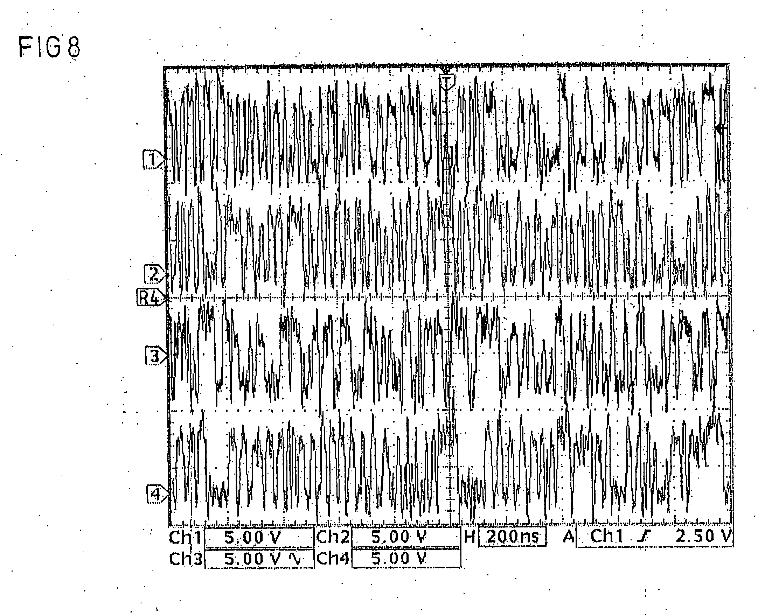

Fig. 7 zeigt eine Instanz des RRO mit den Parametern L=4, K₁=1, K₂=3, K₃=4, K₄=5 ; M₁=3, M₂=2, M₃=1, M₄=0. Als Kurzschreibweise wird RRO (4; 1,3,4,5; 3,2,1,0) verwendet. Die inneren Paritätssignale sind durch die Konstruktion des RRO sehr unterschiedlich, wie dies die Fig. 8 zeigt, und können zur Erzeugung von Zufallsbits benutzt werden.

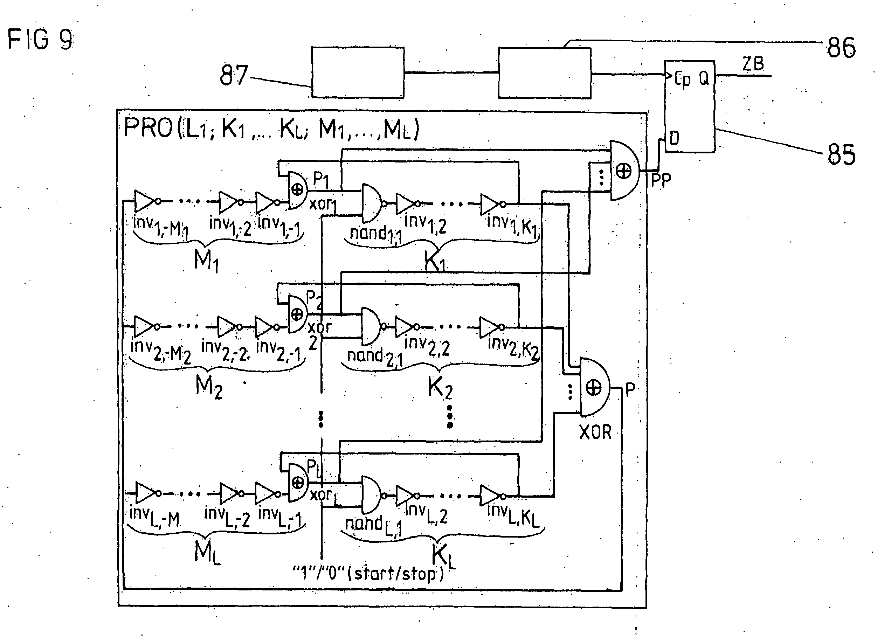

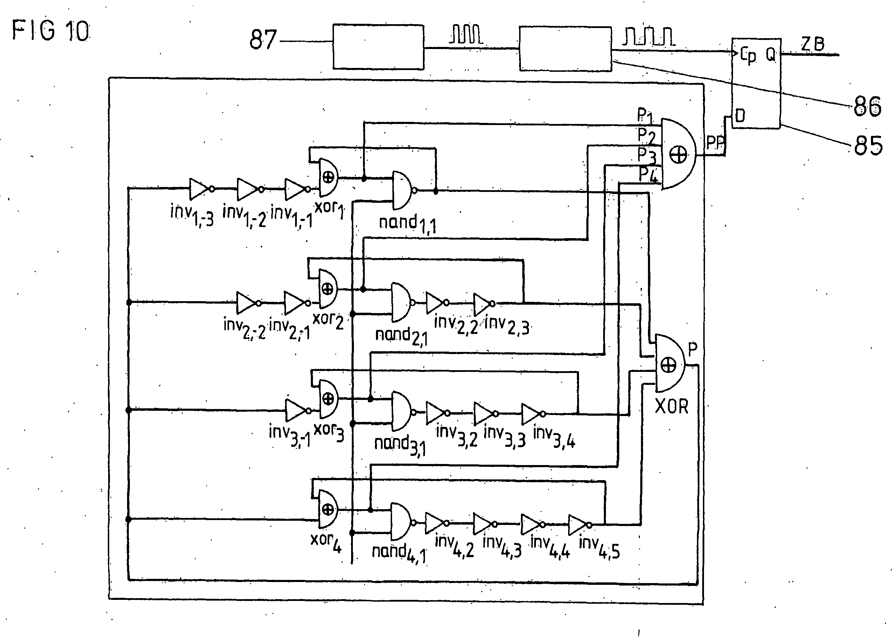

Durch eine weitere Paritätsprüfung PP der inneren Paritätssignale P₁, P₂,...P_{L}, bei der ein weiteres Paritätssignal PP erzeugt wird, wird die Qualität weiter verbessert und kann nach Abtastung als Zufallsbitfolge ZB verwendet werden, wie dies in Fig. 9 dargestellt ist. Die Abtastung erfolgt durch ein D-Flip-Flop 85, welches durch ein periodisches Taktsignal Cₚ angesteuert wird. Das Taktsignal Cₚ kann von einem astabilen Multivibrator 87 erzeugt werden und seine Periode (uniformes Abtastungsintervall) durch einen binären Zähler 86 bestimmt werden. Um zufällige, nicht uniforme Abtastintervalle zu erhalten, kann der astabile Multivibrator 87 durch einen RRO ersetzt werden. In Fig. 10 ist ein Zufallzahlengenerator mit der RRO-Instanz RRO (4; 1,3,4,5; 3,2,1,0) mit uniformer Abtastung dargestellt. Statistische Tests dieses Zufallszahlengenerators haben eine geringe Ungleichverteilung (Bias) und eine kleine Korrelation der Bits 7 gezeigt.

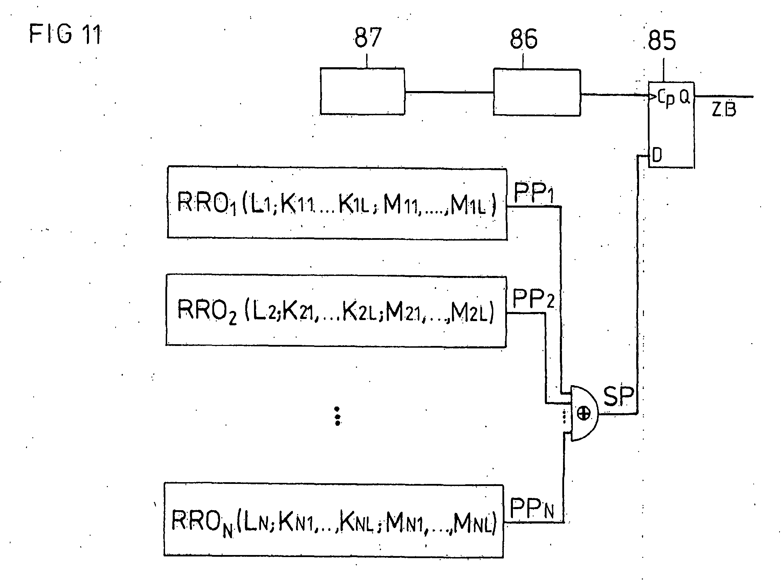

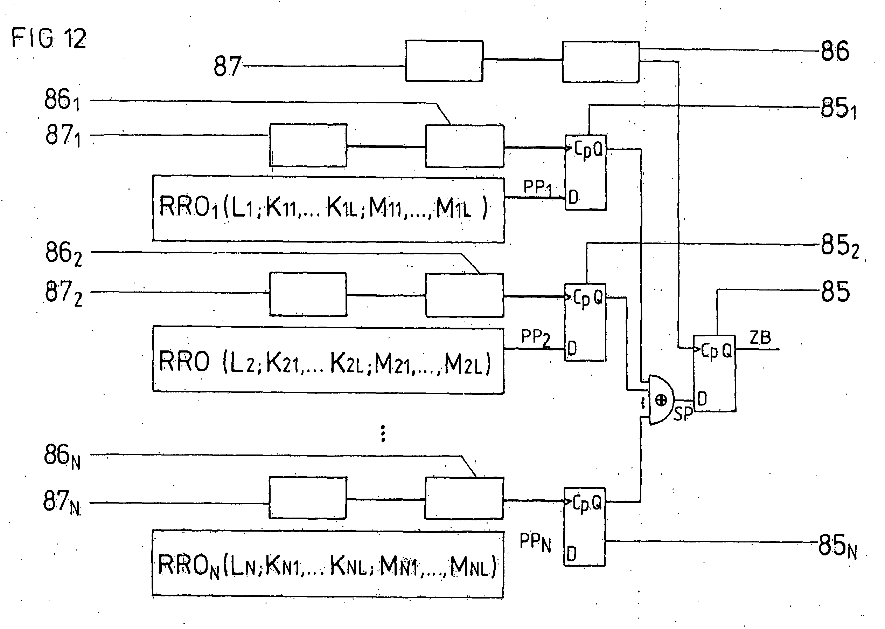

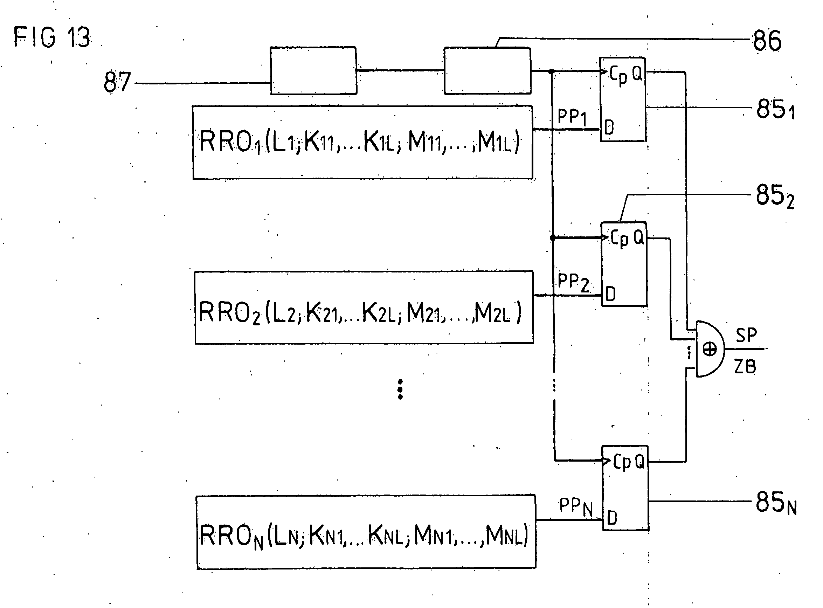

Um diese zu beseitigen, wurden mehrere RROs durch eine weitere (Super-)Paritätsprüfung SP gekoppelt. Diese Kopplung kann auf verschiedene Weise durchgeführt werden. In Fig. 11 erfolgt die uniforme Abtastung nach der Paritätsprüfung PP, wohingegen in Fig. 12 die einzelnen RROs vor der (Super)Paritätsprüfung SP abgetastet werden. Da dies asynchron geschieht, muss, um Zufallsbits 7 gleicher Dauer zu erhalten, das Superparitätssignal SP nochmals abgetastet werden. Um dies zu vermeiden kann die Abtastung auch synchron durchgeführt werden, wie in Fig. 13 gezeigt wird.

Oft zeigt sich in der Praxis ein kleines aber immer noch störendes Bias. Dementsprechend wird eine Zufallsbitfolge erzeugt, die nicht gut genug ist. Auch andere elektronisch realisierte TRNGs besitzen diesen Mangel, der meistens durch die unangepassten Arbeitspunkte der benutzten aktiven Halbleiterkomponenten bedingt ist. Um dieses Restbias zu neutralisieren, werden in bisheriger Praxis verschiedene deterministische Nachbearbeitungen nach der Abtastung (auf digitaler Ebene) durchgeführt, wie z.B. die oft benutzte von Neuman-Methode. Alle diese Algorithmen vermindern die Rate der erzeugten Zufallsbits wesentlich.

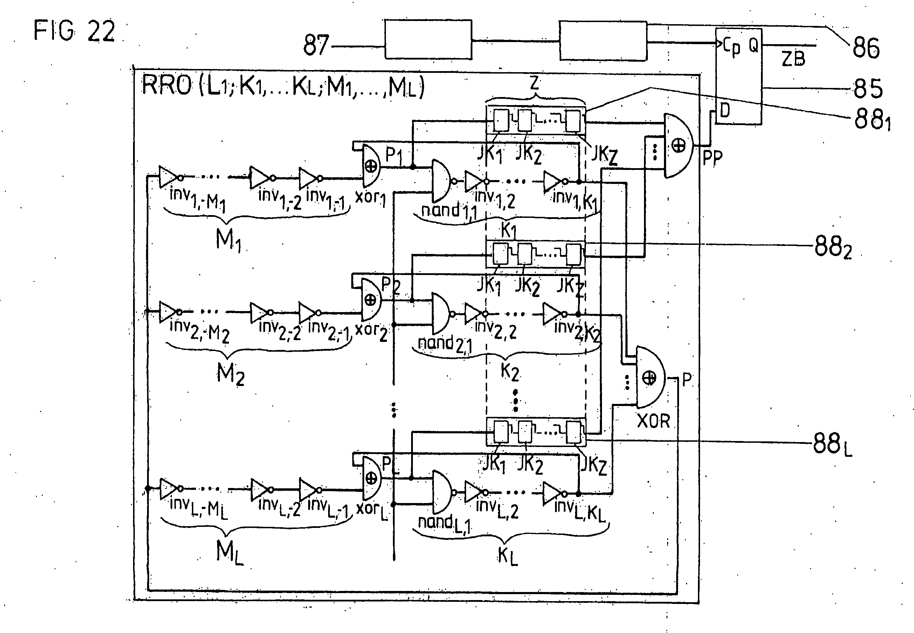

Dennoch, bei rückgekoppelten Ringoszillatoren RRO kann dieses Restbias schon vor der Abtastung neutralisiert werden, wenn an den Ausgängen P₁, P₂, ....., P_{L} der Ringoszillatoren RRO (siehe Fig. 9) binäre Zähler 88₁, 88₂, ...88_{L} der Länge Z (hier mit einer Anzahl Z JK-Flip-Flops JK₁, JK₂ ... JK_{Z}) angeschlossen werden. Die Ausgänge dieser Zähler 88₁, 88₂,... 88_{L} werden an die Eingänge des XOR-Gatters, welches weitere Paritätssignal PP liefert, angeschlossen (Fig. 22). Durch Zählen der Signalübergänge zwischen beiden Signalzuständen (Hoch und Niedrig mit ungleicher Dauer) erhält man neue (längere) Signalzustände. Diese neuen Signalzustände sind einander dauermäßig ähnlicher, als die Signalzustände des ursprünglichen Signals. Je größer die Anzahl Z ist, desto bessere Ausgleichungen der Signalzustandsdauern kann man erreichen und damit das Restbias auf beliebig kleine Werte unterdrücken. Schon bei Z=1 erreicht man gute Ergebnisse.

### Bezugszeichenliste / Abkürzungen

- 1: Zufallsquelle
- 2: Wertermittlung
- 3: Zufalls-Bit-Erzeugung
- 4: algorithmische Nachbearbeitung/Zufallsextraktion
- 5: Zufalls-Bit-Ausgabe
- 6: physikalische Umgebung
- 8: Ringoszillator
- 9: Ringoszillator mit Steuereingang
- 10: Ringoszillator
- 11: Eingangssignal
- 12: Ausgangssignal
- 13: Signaleinhüllende
- 14: Signalverlauf an Leitungspunkt A'
- 15: Hüllkurve
- 17: Ringoszillator
- 18: Ringoszillator
- 19: Ringoszillator
- 20: Ringoszillator
- 21: Ringoszillator
- 22: Ringoszillator
- 24: Ringoszillator
- 25: Ringoszillator
- 27: erstes Eingangssignal des XOR-Gatters
- 28: zweites Eingangssignal des XOR-Gatters
- 29: Paritätssignal
- 30: Einhüllende des gemittelten Paritätssignals
- 32: Ringoszillator
- 33: Ringoszillator
- 34: Ringoszillator
- 36: externer Paritätseingang
- 37: externer Paritätseingang
- 38: externer Paritätseingang
- 41: Ringoszillator
- 42: Ringoszillator
- 43: Ringoszillator
- 45: externer Paritätseingang
- 46: externer Paritätseingang
- 47: externer Paritätseingang
- 47°: externer Paritätseingang
- 71: Ringoszillator
- 72: Ringoszillator
- 73: Ringoszillator
- 81: Ringoszillator
- 82: Ringoszillator
- 83: Ringoszillator
- 84: Ringoszillator
- 85: D-Flip-Flop
- 85₁: D-Flip-Flop
- ... 86: binärer Zähler
- 86₁: binärer Zähler
- ... 87: astabiler Multivibrator
- 87₁: astabiler Multivibrator
- ... 88₁: binärer Zähler
- ... A: Leitungspunkt
- B: Leitungspunkt
- C: Leitungspunkt
- A': Leitungspunkt
- DES: Data Encryption Standard
- f: Frequenz
- inv: Inverter

- inv₁: Inverter/NOT-Gatter
- inv₂: Inverter/NOT-Gatter
...
- invₖ: Inverter/NOT-Gatter
- JK₁: JK-Flip-Flop
- JK₂: JK-Flip-Flop
...
- JK_{z}: JK-Flip-Flop
- K: Anzahl der Gatter
- K₁: Anzahl der Gatter
- K₁: Anzahl der Gatter
- K₂: Anzahl der Gatter
- K₃: Anzahl der Gatter
...
- K_{L}: Anzahl der Gatter
- L: Anzahl der Ringoszillatoren
- M: Anzahl der Gatter
- M₁: Anzahl der Gatter
- M₂: Anzahl der Gatter
- M₃: Anzahl der Gatter
- M₄: Anzahl der Gatter
...
- M_{L}: Anzahl der Gatter
- N: Anzahl der Ringoszillatoren
- nand₁: NAND-Gatter
- nand₂:
...
- P: Periode
- P₁: internes Paritätssignal
- P₂: internes Paritätssignal
...
- P_{L}: internes Paritätssignal
- PRNG: deterministischer Zufallsgenerator
- PS: externes Paritätssignal
- RRO: rückgekoppelte Ringoszillatoren
- S: Leitungspunkt
- SP: Superparitätssignal
- Start/Stop: Steuereingang
- t: Zeit
- t₁: Zeitpunkt
- T: Laufzeit
- TRNG: physikalischer Zufallsgenerator
- U: Spannung
- Uₑ: Eingangsspannung
- Uₐ: Ausgangsspannung

- xor: Exklusiv ODER -/XOR-Gatter mit logisch "1" am Ausgang, wenn ungerade Anzahl der Eingänge auf logisch "1"
- xor₁: Exklusiv ODER -/XOR-Gatter mit logisch "1" am Ausgang, wenn ungerade Anzahl der Eingänge auf logisch "1"
- xor₂: Exklusiv ODER -/XOR-Gatter mit logisch "1" am Ausgang, wenn ungerade Anzahl der Eingänge auf logisch "1"
- Z: Anzahl
- ZB: Zufallsbit
- Δ: Differenz
- ν: Abtastrate
- νₘₐₓ: maximale Abtastrate
- τ: Verzögerungszeit

## Patentansprüche

1. Verfahren zur Erzeugung von Zufallszahlen bei dem von wenigstens zwei Ringoszillatoren (32, 33, 34, 41, 42, 43, 71, 72, 73, 81, 82, 83, 84) oszillierende digitale Ausgangssignale (A1, A2, ..., AL) gleicher oder unterschiedlicher Periodizität erzeugt werden, wobei ein einen logischen Zustand ("0", "1"), darstellendes externes Paritätssignal (PS) erzeugt wird, welches genau dann den logischen Zustand "1" einnimmt, wenn eine ungerade Anzahl von Ausgangssignalen (A1, A2, ..., AL) den logischen Zustand "1" aufweist, und welches ansonsten den logischen Zustand "0" einnimmt,
**dadurch gekennzeichnet, dass**
das externe Paritätssignal (PS) auf jeweils einen externen Paritätseingang (36, 37, 38, 45, 46, 47) der jeweiligen Ringoszillatoren (32, 33, 34, 41, 42, 43, 71, 72, 73, 81, 82, 83, 84) rückgekoppelt wird.

2. Verfahren nach Anspruch 1,
**dadurch gekennzeichnet, dass**
zu jedem Ringoszillator (32, 33, 34, 41, 42, 43, 71, 72, 73, 81, 82, 83, 84) jeweils ein einen vorbestimmten logischen Zustand ("0", "1") darstellendes internes Paritätssignal (P₁, P₂, P₃, P₄ ... P_{L}) erzeugt wird, wenn entweder das Ausgangssignal (A₁, A₂ .... A_{L}) des jeweiligen Ringoszillators (32, 33, 34, 41, 42, 43, 71, 72, 73, 81, 82, 83, 84) oder das auf den externen Paritätseingang (36, 37, 38, 45, 46, 47) des jeweiligen Ringoszillators (32, 33, 34, 41, 42, 43, 71, 72, 73, 81, 82, 83, 84) rückgekoppelte Signal einen vorgegebenen logischen Zustand ("1") einnimmt.

3. Verfahren nach Anspruch 2,
**dadurch gekennzeichnet, dass**
ein einen logischen Zustand ("0", "1") darstellendes weiteres Paritätssignal (PP) erzeugt wird, welches genau dann den logischen Zustand "1" einnimmt, wenn eine ungerade Anzahl der internen Paritätssignale (P₁, P₂, P₃, P₄ ... P_{L}) den logischen Zustand "1" aufweist, und welches ansonsten den logischen Zustand "0" einnimmt.

4. Verfahren nach Anspruch 3,
**dadurch gekennzeichnet, dass**
Signalübergänge der internen Paritätssignale (P₁, P₂, P₃, P₄ ... P_{z}) vor der Paritätssignalerzeugung gezählt werden

5. Verfahren nach einem der vorangegangenen Ansprüche,
**dadurch gekennzeichnet, dass**
wenigstens einer der Ringoszillatoren (32, 33, 34, 41, 42, 43, 71, 72, 73, 81, 82, 83, 84) mit Hilfe eines einem entsprechenden Eingang (Start/Stop) des entsprechenden Ringoszillators (32, 33, 34, 41, 42, 43, 71, 72, 73, 81, 82, 83, 84) zugeführten Startsignals ("1") zur Oszillation angeregt wird.

6. Verfahren nach Anspruch 5,
**dadurch gekennzeichnet, dass**
alle Ringoszillatoren (32, 33, 34, 41, 42, 43, 71, 72, 73, 81, 82, 83, 84), vorzugsweise gleichzeitig, mit Hilfe desselben Startsignals ("1") zur Oszillation angeregt werden.

7. Verfahren nach einem der vorangegangenen Ansprüche,
**dadurch gekennzeichnet, dass**
das externe Paritätssignal (PS) vor dessen Rückkopplung auf wenigstens einen der externen Paritätseingänge (47) invertiert wird.

8. Verfahren nach einem der vorangegangenen Ansprüche,
**dadurch gekennzeichnet, dass**
das externe Paritätssignal (PS) vor dessen Rückkopplung auf wenigstens einen der externen Paritätseingänge (47) verzögert wird.

9. Verfahren nach Anspruch 8,
**dadurch gekennzeichnet, dass**
das externe Paritätssignal (PS) vor dessen Rückkopplung auf unterschiedliche externe Paritätseingänge (36, 37, 38, 45, 46, 47) um unterschiedliche Zeitdauern (τ) verzögert wird.

10. Verfahren nach Anspruch 9,
**dadurch gekennzeichnet, dass** die Periodizitäten der Ringoszillatoren (32, 33, 34, 41, 42, 43, 71, 72, 73, 81, 82, 83, 84) und die Verzögerungszeitdauern des externen Paritätssignals (PS) an den externen Paritätseingängen (36, 37, 38, 45, 46, 47) der Ringoszillatoren (32, 33, 34, 41, 42, 43, 71, 72, 73, 81, 82, 83, 84) derart gewählt werden, dass die Summe der ein ungeradzahliges Vielfaches (K₁, K₂, K₃, ... K_{L}) einer Verzögerungszeit eines Gatters betragenden Periodizität eines der von einem ersten der Ringoszillatoren (32, 33, 34, 41, 42, 43, 71, 72, 73, 81, 82, 83, 84) erzeugten Ausgangssignals (A₁, A₂ .... A_{L}) und der ein Vielfaches (M₁, M₂, M₃, ... M_{L}) der Verzögerungszeit eines Gatters betragenden Verzögerungszeitdauer des externen Paritätssignals (PS) an dem externen Paritätseingang (36, 37, 38, 45, 46, 47) des ersten der Ringoszillatoren (32, 33, 34, 41, 42, 43, 71, 72, 73, 81, 82, 83, 84) ein ungeradzahliges Vielfaches der Verzögerungszeit eines Gatters ist und dass die Summe der ein ungeradzahliges Vielfaches (K₁, K₂, K₃, ... K_{L}) der Verzögerungszeit eines Gatters betragenden Periodizität eines der von einem zweiten der Ringoszillatoren (32, 33, 34, 41, 42, 43, 71, 72, 73, 81, 82, 83, 84) erzeugten Ausgangssignals (A₁, A₂ .... A_{L}) und der ein Vielfaches (M₁, M₂, M₃, ... M_{L}) der Verzögerungszeit eines Gatters betragenden Verzögerungszeitdauer des externen Paritätssignals (PS) an dem externen Paritätseingang (36, 37, 38, 45, 46, 47) des zweiten der Ringoszillatoren (32, 33, 34, 41, 42, 43, 71, 72, 73, 81, 82, 83, 84) ein geradzahliges Vielfaches der Verzögerungszeit eines Gatters ist.

11. Verfahren nach einem der vorangegangenen Ansprüche,
**dadurch gekennzeichnet, dass**
das externe Paritätssignal (PS) zur Erzeugung von Zufallsbits (78) mit einer vorgegebenen Rate (v) abgetastet wird oder dass das weitere Paritätssignal (PP) zur Erzeugung von Zufallsbits (78) mit einer vorgegebenen Rate (v) abgetastet wird.

12. Verfahren nach einem der vorangegangenen Ansprüche,
**dadurch gekennzeichnet, dass**
mehrere externe, insbesondere abgetastete, Paritätssignale (PS) erzeugt werden und dass ein einen logischen Zustand ("0", "1") darstellendes Superparitätssignal (SP) erzeugt wird, welches genau dann den logischen Zustand "1" einnimmt, wenn eine ungerade Anzahl der externen, insbesondere abgetasteten, Paritätssignale (PS) den logischen Zustand "1" aufweist, und welches ansonsten den logischen Zustand "0" einnimmt oder dass mehrere weitere, insbesondere abgetastete, Paritätssignale erzeugt werden und dass ein einen logischen Zustand ("0", "1") darstellendes Superparitätssignal (SP) erzeugt wird, welches genau dann den logischen Zustand "1" einnimmt, wenn eine ungerade Anzahl der weiteren, insbesondere abgetasteten, Paritätssignale den logischen Zustand "1" aufweist, und welches ansonsten den logischen Zustand "0" einnimmt.

13. Verfahren nach Anspruch 12,
**dadurch gekennzeichnet, dass**
die externen oder die weiteren Paritätssignale (PS) zur Erzeugung von Zufallsbits (ZB) mit einer vorgegebenen Rate (v) synchron abgetastet werden oder dass das Superparitätssignal (SP) zur Erzeugung von Zufallsbits (ZB) mit einer vorgegebenen Rate (v) abgetastet.wird.

14. Verfahren nach einem der Ansprüche 11 bis 13,
**dadurch gekennzeichnet, dass**
die Abtastung in zufälligen, nicht uniformen Abtastintervallen durchgeführt wird, insbesondere dass die Abtastung dann durchgeführt wird, wenn ein nach einem der Verfahren nach den Ansprüchen 1 bis 12 zufällig erzeugtes Zufallsbit (ZB) einen vorbestimmten logischen Zustand ("1") einnimmt.

15. Zufallszahlengenerator mit wenigstens zwei Ringoszillatoren (32, 33, 34, 41, 42, 43, 71, 72, 73, 81, 82, 83, 84), insbesondere aus unabhängig freischwingenden rückgekoppelten Inverterketten mit einer ungeraden Anzahl (K) an hintereinandergeschalteten Invertern (inv_{1,2}, inv_{2,1}, inv_{3,1}, ... inv_{i,j}, ... inv_{L,KL}), welche oszillierende digitale Ausgangssignale (A₁, A₂, .... A_{L}) unterschiedlicher Periodizität erzeugen, und mit ersten Paritätssignalerzeugungsmitteln (XOR), welche ein einen vorbestimmten logischen Zustand ("0", "1") darstellendes externes Paritätssignal (PS) erzeugen, welches genau dann den logischen Zustand "1" einnimmt, wenn eine ungerade Anzahl der Ausgangssignale (A₁, A₂ .... A_{L}) den logischen Zustand "1" aufweist, und welches ansonsten den logischen Zustand "0" einnimmt,
**dadurch gekennzeichnet, dass**
Rückkoppelmittel (xor₁, xor₂, xor₃, xor₄ ... xor_{L}) vorgesehen sind, welche das externe Paritätssignal (PS) auf jeweils einen externen Paritätseingang (36, 37, 38, 45, 46, 47) der jeweiligen Ringoszillatoren (32, 33, 34, 41, 42, 43, 71, 72, 73, 81, 82, 83, 84) rückkoppeln.

16. Zufallszahlengenerator nach Anspruch 15,
**dadurch gekennzeichnet, dass**
die ersten Paritätssignalerzeugungsmittel ein XOR-Gatter (XOR) umfassen, an dessen Eingängen die Ausgangssignale (A₁, A₂, .... A_{L}) anliegen.

17. Zufallszahlengenerator nach einem der Ansprüche 15 oder 16,
**dadurch gekennzeichnet, dass**
zweite Paritätssignalerzeugungsmittel (xor₁, xor₂, xor₃, ... xor_{L}) vorgesehen sind, welche zu jedem Ringoszillator (32, 33, 34, 41, 42, 43, 71, 72, 73, 81, 82, 83, 84) jeweils ein einen vorgegebenen logischen Zustand ("1") darstellendes internes Paritätssignal (P₁, P₂, P₃, P₄ ... P_{L}) erzeugen, welches genau dann den logischen Zustand "1" einnimmt, wenn entweder das Ausgangssignal (A₁, A₂ .... A_{L}) des jeweiligen Ringoszillators (32, 33, 34, 41, 42, 43, 71, 72, 73, 81, 82, 83, 84) oder das auf den externen Paritätseingang (36, 37, 38, 45, 46, 47) des jeweiligen Ringoszillators (32, 33, 34, 41, 42, 43, 71, 72, 73, 8-1, 82, 83, 84) rückgekoppelte Signal einen vorgegebenen logischen Zustand ("1") einnimmt.

18. Zufallszahlengenerator nach Anspruch 17,
**dadurch gekennzeichnet, dass**
die zweiten Paritätssignalerzeugungsmittel XOR-Gatter (xor₁, xor₂, xor₃, ... xor_{L}) mit jeweils einem externen Paritätseingang und einem Ausgangssignal-Eingang umfassen, wobei an dem Paritätseingang ein vom externen Paritätssignal (PS) abgeleitetes Signal und an dem Ausgangssignal-Eingang das jeweilige Ausgangssignal (A₁, A₂ .... A_{L}) des jeweiligen Ringoszillators (32, 33, 34, 41, 42, 43, 71, 72, 73, 81, 82, 83, 84) anliegt.

19. Zufallszahlengenerator nach Anspruch 18,
**dadurch gekennzeichnet, dass**
dritte Paritätssignalerzeugungsmittel vorgesehen sind, welche ein einen logischen Zustand ("0", "1") darstellendes weiteres Paritätssignal (WP) erzeugen, welches genau dann den logischen Zustand "1" einnimmt, wenn eine ungerade Anzahl der internen Paritätssignale (P₁, P₂, P₃, P₄. ... P_{L}) den logischen Zustand "1" aufweist, und welches ansonsten den logischen Zustand "0" einnimmt.

20. Zufallszahlengenerator nach Anspruch 19,
**dadurch gekennzeichnet, dass**
Zählmittel (88₁, 88₂, ...88_{L}) vorgesehen sind, welche Signalübergänge der internen Paritätssignale (P₁, P₂, P₃, ... P_{L}) vor der Paritätssignalerzeugung zählen.

21. Zufallszahlengenerator nach Anspruch 20,
**dadurch gekennzeichnet, dass**
die Zählmittel einen Binärzähler (88₁, 88₂, ... 88_{L}), insbesondere eine Kette mit Flip-Flops, vorzugsweise JK-Flip-Flops (JK₁, JK₂, ...JK₂) umfassen.

22. Zufallszahlengenerator nach einem der Ansprüche 15 bis 21,
**dadurch gekennzeichnet, dass**
Startmittel vorgesehen sind, welche ein Startsignal ("1") erzeugen und einem Eingang (start/stop) von wenigstens einem der Ringoszillatoren (32, 33, 34, 41, 42, 43, 71, 72, 73, 81, 82, 83, 84) zuführen, so dass dieser zur Oszillation angeregt wird.

23. Zufallszahlengenerator nach Anspruch 22,
**dadurch gekennzeichnet, dass**
der wenigstens eine der Ringoszillatoren (32, 33, 34, 41, 42, 43, 71, 72, 73, 81, 82, 83, 84) anstelle eines eingangsseitigen Inverters (inv₁) ein NAND-Gatter (nand₁, nand_{1,1}, nand_{2,1}, nand_{3,1}, ... nand_{i,1}, ... nand_{L,1}) mit dem Eingang (start/stop) zum Zuführen des Startsignals ("1") umfasst.

24. Zufallszahlengenerator nach einem der Ansprüche 22 oder 23,
**dadurch gekennzeichnet, dass**
die Startmittel derart ausgebildet sind, dass alle Ringoszillatoren (32, 33, 34, 41, 42, 43, 71, 72, 73, 81, 82, 83, 84), vorzugsweise gleichzeitig, mit Hilfe desselben Startsignals ("1") zur Oszillation angeregt werden.

25. Zufallszahlengenerator nach Anspruch 24,
**dadurch gekennzeichnet, dass**
alle Ringoszillatoren (32, 33, 34, 41, 42, 43, 71, 72, 73, 81, 82, 83, 84) anstelle eines eingangsseitigen Inverters (inv₁) jeweils ein NAND-Gatter (nand₁, nand_{1,1}, nand_{2,1}, nand_{3,1}, ... nand_{i,1}, ... nand_{L,1}) mit jeweils einem Eingang (start/stop) umfassen, welche zum Zuführen des Startsignals ("1") miteinander verbunden sind.

26. Zufallszahlengenerator nach einem der Ansprüche 15 bis 25,
**dadurch gekennzeichnet, dass**
wenigstens einem externen Paritätseingang (47) ein Inverter (inv_{3,-1}, inv_{1,-M1} .... inv_{1,-1, ...}inv_{L,-ML,} ... inv_{L,-1}) vorgeschaltet ist, dem das externe Paritätssignal (PS) zugeführt wird.

27. Zufallszahlengenerator nach Anspruch 26,
**dadurch gekennzeichnet, dass**
allen externen Paritätseingängen Inverterketten mit einer unterschiedlichen Anzahl (M₁, M₂,... M_{L}) an Invertern (inv_{1,-M1}... inv_{1,-1}, ... inv_{L, -ML,} inv_{L,-1}) vorgeschaltet sind, denen das externe Paritätssignal (PS) zugeführt wird.

28. Zufallszahlengenerator nach Anspruch 27,
**dadurch gekennzeichnet, dass** die Summe der ein ungeradzahliges Vielfaches (K₁, K₂, K₃, ... K_{L}) einer Verzögerungszeit eines Gatters betragenden Periodizität eines der von einem ersten der Ringoszillatoren (32, 33, 34, 41, 42, 43, 71, 72, 73, 81, 82, 83, 84) erzeugten Ausgangssignals (A₁, A₂ .... A_{L}) und der ein Vielfaches (M₁, M₂, M₃, ... M_{L}) der Verzögerungszeit eines Gatters betragenden Verzögerungszeitdauer des externen Paritätssignals (PS) an dem externen Paritätseingang (36, 37, 38, 45, 46, 47) des ersten der Ringoszillatoren (32, 33, 34, 41, 42, 43, 71, 72, 73, 81, 82, 83, 84) ein ungeradzahliges Vielfaches der Verzögerungszeit eines Gatters ist und dass die Summe der ein ungeradzahliges Vielfaches (K₁, K₂, K₃, ... K_{L}) der Verzögerungszeit eines Gatters betragenden Periodizität eines der von einem zweiten der Ringoszillatoren (32, 33, 34, 41, 42, 43, 71, 72, 73, 81, 82, 83, 84) erzeugten Ausgangssignals (A₁, A₂ .... A_{L}) und der ein Vielfaches (M₁, M₂, M₃, ... M_{L}) der Verzögerungszeit eines Gatters betragenden Verzögerungszeitdauer des externen Paritätssignals (PS) an dem externen Paritätseingang (36, 37, 38, 45, 46, 47) des zweiten der Ringoszillatoren (32, 33, 34, 41, 42, 43, 71, 72, 73, 81, 82, 83, 84) ein geradzahliges Vielfaches der Verzögerungszeit eines Gatters ist.

29. Zufallszahlengenerator nach einem der Ansprüche 15 bis 28,
**dadurch gekennzeichnet, dass**
Abtastmittel vorgesehen sind, welche das externe Paritätssignal (PS) zur Erzeugung von Zufallsbits (ZB) mit einer vorgegebenen Rate (v) abtasten und/oder dass Abtastmittel vorgesehen sind, welche das weitere Paritätssignal (PP) zur Erzeugung von Zufallsbits (ZB) mit einer vorgegebenen Rate (v) abtasten.

30. Zufallszahlengenerator nach einem der Ansprüche 15 bis 29,
**dadurch gekennzeichnet, dass**
mehrere Zufallszahlengeneratoren nach einem der Ansprüche 15 bis 29 vorgesehen sind, welche externe, insbesondere abgetastete, Paritätssignale (PS) erzeugen und dass Superparitätssignalerzeugungsmittel vorgesehen sind, welche ein einen logischen Zustand ("0", "1") darstellendes Superparitätssignal (SP) erzeugen, welches genau dann den logischen Zustand "1" einnimmt, wenn eine ungerade Anzahl der externen, insbesondere abgetasteten, Paritätssignale (PS) den logischen Zustand "1" aufweist, und welches ansonsten den logischen Zustand "0" einnimmt und/oder dass mehrere Zufallszahlengeneratoren nach einem der Ansprüche 15 bis 29 vorgesehen sind, welche weitere, insbesondere abgetastete, Paritätssignale (PP) erzeugen und dass Superparitätssignalerzeugungsmittel vorgesehen sind, welche ein einen logischen Zustand ("0", "1") darstellendes Superparitätssignal (SP) erzeugen, welches genau dann den logischen Zustand "1" einnimmt, wenn eine ungerade Anzahl der weiteren, insbesondere abgetasteten, Paritätssignale (PP) den logischen Zustand "1" aufweist, und welches ansonsten den logischen Zustand "0" einnimmt.

31. Zufallszahlengenerator nach Anspruch 30,
**dadurch gekennzeichnet, dass**
Abtastmittel vorgesehen sind, welche die externen Paritätssignale (PS) oder die weiteren Paritätssignale (PP) zur Erzeugung von Zufallsbits (ZB) mit einer vorgegebenen Rate (v) synchron abtasten und/oder dass Abtastmittel vorgesehen sind, welche das Superparitätssignal (SP) zur Erzeugung von Zufallsbits (ZB) mit einer vorgegebenen Rate (v) abtasten.

32. Zufallszahlengenerator nach einem der Ansprüche 29 bis 31,
**dadurch gekennzeichnet, dass**
die Abtastmittel eingerichtet sind, eine Abtastung in zufälligen, nicht uniformen Abtastintervallen durchzuführen und insbesondere dann eine Abtastung vorzunehmen, wenn ein von einem der Zufallsgeneratoren nach den Ansprüchen 15 bis 31 zufällig erzeugtes Zufallsbit (ZB) einen vorbestimmten logischen Zustand ("1") einnimmt.

33. Zufallszahlengenerator nach einem der Ansprüche 29 bis 32,
**dadurch gekennzeichnet, dass**
die Abtastmittel ein D-Flip-Flop (88₁, 88₂, ... 88_{L}) umfassen, welches in einem Takt (Cp) von einem Taktgeber, insbesondere von einem astabilen Multivibrator (87, 87₁, 87₂, ... 87_{L}) oder von einem rückgekoppelten Ringoszillator (RRO), angesteuert wird.

## Claims

1. A method for the generation of random numbers in which oscillating digital output signals (A1, A2, ..., AL) of the same or different periodicity are generated by at least two ring oscillators (32, 33, 34, 41, 42, 43, 71, 72, 73, 81, 82, 83, 84), an external parity signal (PS) representing a logical state ("0", "1") being generated, which external parity signal assumes the logical state "1" if and only if an odd number of output signals (A1, A2, ..., AL) exhibits the logical state "1", and which otherwise assumes the logical state "0",
**characterised in that** the external parity signal (PS) is fed back to respectively an external parity input (36, 37, 38, 45, 46, 47) of the respective ring oscillators (32, 33, 34, 41, 42, 43, 71, 72, 73, 81, 82, 83, 84).

2. A method according to Claim 1,
**characterised in that** for each ring oscillator (32, 33, 34, 41, 42, 43, 71, 72, 73, 81, 82, 83, 84) there is generated in each case an internal parity signal (P₁, P₂, P₃, P₄ ... P_{L}) representing a predetermined logical state ("0", "1") when either the output signal (A₁, A₂ ... A_{L}) of the respective ring oscillator (32, 33, 34, 41, 42, 43, 71, 72, 73, 81, 82, 83, 84) or the signal fed back to the external parity input (36, 37, 38, 45, 46, 47) of the respective ring oscillator (32, 33, 34, 41, 42, 71, 72, 73, 81, 82, 83, 84) assumes a specified logical state ("1").

3. A method according to Claim 2,
**characterised in that** a further parity signal (PP) representing a logical state ("0", "1") is generated, which assumes the logical state "1" if and only if an odd number of the internal parity signals (P₁, P₂, P₃, P₄ ... P_{L}) exhibit the logical state "1", and which otherwise assumes the logical state "0".

4. A method according to Claim 3,
**characterised in that** signal transitions of the internal parity signals (P₁, P₂, P₃, P₄ ... P_{Z}) are counted before parity signal generation.

5. A method according to one of the preceding Claims,
**characterised in that** at least one of the ring oscillators (32, 33, 34, 41, 42, 43, 71, 72, 73, 81, 82, 83, 84) is excited into oscillation with the aid of a start signal ("1") supplied to a corresponding input (start/stop) of the corresponding ring oscillator (32, 33, 34, 41, 42, 43, 71, 72, 73, 81, 82, 83, 84).

6. A method according to Claim 5,
**characterised in that** all ring oscillators (32, 33, 34, 41, 42, 43, 71, 72, 73, 81, 82, 83, 84) are excited into oscillation, preferably at the same time, with the aid of the same start signal ("1").

7. A method according to one according to the preceding Claims,
**characterised in that** the external parity signal (PS) is inverted before being fed back to at least one of the external parity inputs (47).

8. A method according to one of the preceding Claims,
**characterised in that** the external parity signal (PS) is delayed before being fed back to at least one of the external parity inputs (47).

9. A method according to Claim 8,
**characterised in that** the external parity signal (PS) is delayed by different time durations (τ) before being fed back to different external parity inputs (36, 37, 38, 45, 46, 47).

10. A method according to claim 9,
**characterised in that** the periodicities of the ring oscillators (32, 33, 34, 41, 42, 43, 71, 72, 73, 81, 82, 83, 84) and the delay time durations of the external parity signal (PS) at the external parity inputs (36, 37, 38, 45, 46, 47) of the ring oscillators (32, 33, 34, 41, 42, 43, 71, 72, 73, 81, 82, 83, 84) are chosen such that the sum of the periodicity of an output signal (A₁, A₂ ... A_{L}) generated by a first of the ring oscillators (32, 33, 34, 41, 42, 43, 71, 72, 73, 81, 82, 83, 84), said periodicity having a value of an odd multiple (K₁, K₂, K₃, ... K_{L}) of a delay time of a gate, and of the delay time duration of the external parity signal (PS) at the external parity input (36, 37, 38, 45, 46, 47) of the first of the ring oscillators (32, 33, 34, 41, 42, 43, 71, 72, 73, 81, 82, 83, 84), said delay time duration having the value of a multiple (M₁, M₂, M₃ ... M_{L}) of the delay time of a gate, is an odd multiple of the delay time of a gate,
**and in that** the sum of the periodicity of an output signal (A₁, A₂ ... A_{L}) generated by a second of the ring oscillators (32, 33, 34, 41, 42, 43, 71, 72, 73, 81, 82, 83, 84), said periodicity having the value of an odd multiple (K₁, K₂, K₃, ... K_{L}) of the delay time of a gate, and of the delay time duration of the external parity signal (PS) at the external parity input (36, 37, 38, 45, 46, 47) of the second of the ring oscillators (32, 33, 34, 41, 42, 43, 71, 72, 73, 81, 82, 83, 84), said delay time during having the value of a multiple (M₁, M₂, M₃, ... M_{L}) of the delay time of a gate, is an even multiple of the delay time of a gate.

11. A method according to one of the preceding Claims,
**characterised in that** the external parity signal (PS) is sampled at a specified rate (v) for the generation of random bits (78)
**or in that** the further parity signal (PP) is sampled at a specified rate (v) for the generation of random bits (78).

12. A method according to one of the preceding Claims,
**characterised in that** several external, in particular sampled, parity signals (PS) are generated
and **in that** there is generated a super parity signal (SP) representing a logical state ("0", "1"), which super parity signal assumes the logical state "1" if and only if an odd number of the external, in particular sampled, parity signals (PS) exhibit the logical state "1", and which otherwise assumes the logical state "0",
**or in that** several further, in particular sampled, parity signals are generated
**and in that** a super parity signal (SP) representing a logical state ("0", "1") is generated, which super parity signal assumes the logical state "1" if and only if an odd number of the further, in particular sampled, parity signals exhibits the logical state "1", and which otherwise assumes the logical state "0".

13. A method according to Claim 12
**characterised in that** the external or the further parity signals (PS) are synchronously sampled at a specified rate (v) for the generation of random bits (ZB)
or **in that** the super parity signal (SP) is sampled at a specified rate (v) for the generation of random bits (ZB).

14. A method according to one of Claims 11 to 13,
**characterised in that** sampling is performed at random, non-uniform sampling intervals,
**in particular in that** sampling is performed when a random bit (ZB) randomly generated by of one of the methods according to Claims 1 to 12 assumes a predetermined logical state ("1").

15. A random number generator having at least two ring oscillators (32, 33, 34, 41, 42, 43, 71, 72, 73, 81, 82, 83, 84), in particular made up of independently free-running inverter chains with feedback having an odd number (K) of series-connected inverters (inv_{1,2}, inv_{2,1}, inv_{3,1}, ... inv_{i,j}, ... inv_{L,KL}), which generate oscillating digital output signals (A₁, A₂, .... A_{L}) unequal in periodicity, and having first parity signal generating means (XOR), which generate an external parity signal (PS) representing a predetermined logical state ("0", "1"), which external parity signal assumes the logical state "1" if and only if an odd number of the output signals (A₁, A₂ ... A_{L}) exhibit the logical state "1", and which otherwise assumes the logical state "0",
**characterised in that** feedback means (xor₁, xor₂, xor₃, xor₄ ... xor_{L}) are provided, which feed back the external parity signal (PS) to respectively an external parity input (36, 37, 38, 45, 46, 47) of the respective ring oscillators (32, 33, 34, 41, 42, 43, 71, 72, 73, 81, 82, 83, 84).

16. A random number generator according to Claim 15,
**characterised in that** the first parity signal generating means comprise an XOR gate (XOR) at the inputs of which the output signals (A₁, A₂, ... A_{L}) are present.

17. A random number generator according to one according to one of Claims 15 or 16,
**characterised in that** second parity signal generating means (xor₁, xor₂, xor₃, ... xor_{L}) are provided, which for each ring oscillator (32, 33, 34, 41, 42, 43, 71, 72, 73, 81, 82, 83, 84) generate in each case an internal parity signal (P₁, P₂, P₃, P₄ ... P_{L}) representing a specified logical state ("1"), which internal parity signal assumes the logical state "1" if and only if either the output signal (A₁, A₂ ... A_{L}) of the respective ring oscillator (32, 33, 34, 41, 42, 43, 71, 72, 73, 81, 82, 83, 84) or the signal fed back to the external parity input (36, 37, 38, 45, 46, 47) of the respective ring oscillator (32, 33, 34, 41, 42, 43, 71, 72, 73, 81, 82, 83, 84) assumes a specified logical state ("1").

18. A random number generator according to Claim 17,
**characterised in that** the second parity signal generating means comprise XOR gates (xor₁, xor₂, xor₃, ... xor_{L}) each having an external parity input and an output signal input, a signal derived from the external parity signal (PS) being present at the parity input and the respective output signal (A₁, A₂ ... A_{L}) of the respective ring oscillator (32, 33, 34, 41, 42, 43, 71, 72, 73, 81, 82, 83, 84) being present at the output signal input.

19. A random number generator according to Claim 18,
**characterised in that** third parity signal generating means are provided, which generate a further parity signal (WP) representing a logical state ("0", "1"), which further parity signal assumes the logical state "1" if and only if an odd number of the internal parity signals (P₁, P₂, P₃, P₄ ... P_{L}) exhibits the logical state "1", and which otherwise assumes the logical state "0".

20. A random number generator according to Claim 19,
**characterised in that** there are provided counting means (88₁, 88₂, ... 88_{L}) that count signal transitions of the internal parity signals (P₁, P₂, P₃ ... P_{L}) before parity signal generation.

21. A random number generator according to Claim 20,
**characterised in that** the counting means comprise a binary counter (88₁, 88₂, ... 88_{L}), in particular a chain with flip-flops, preferably JK flip-flops (JK₁, JK₂, ... J_{Z}).

22. A random number generator according to one of Claims 15 to 21,
**characterised in that** starting means are provided, which generate a start signal ("1") and supply it to an input (start/stop) of at least one of the ring oscillators (32, 33, 34, 41, 42, 43, 71, 72, 73, 81, 82, 83, 84) so that this ring oscillator is excited into oscillation.

23. A random number generator according to Claim 22,
**characterised in that** the at least one of the ring oscillators (32, 33, 34, 41, 42, 43, 71, 72, 73, 81, 82, 83, 84) comprises, instead of an inverter (inv₁) on the input side, a NAND gate (nand₁, nand_{1,1}, nand_{2,1}, nand_{3,1}, ..., nand_{i,1}, ... nand_{L,1}) having the input (start/stop) for supplying the start signal ("1").

24. A random number generator according to one of Claims 22 or 23,
**characterised in that** the starting means are designed such that all ring oscillators (32, 33, 34, 41, 42, 43, 71, 72, 73, 81, 82, 83, 83) are excited into oscillation, preferably at the same time, with the aid of the same start signal ("1").

25. A random number generator according to Claim 24,
**characterised in that** all ring oscillators (32, 33, 34, 41, 42, 43, 71, 72, 73, 81, 82, 83, 84) in each case comprise, instead of an inverter (inv₁) on the input side, a NAND gate (nand₁, nand_{1,1}, nand_{2,1}, nand_{3,1}, ... nand_{i,1}, ... nand_{L,1}) having in each case an input (start/stop), which are connected to one another for supplying the start signal ("1").

26. A random number generator according to one of Claims 15 to 25,
**characterised in that** an inverter (inv_{3,-1}, inv_{1,-M1} ... inv_{1,-1}, ... inv_{L,-ML}, ... inv_{L,-1}), to which the external parity signal (PS) is supplied, is connected in front of at least one external parity input (47).

27. A random number generator according to Claim 26,
**characterised in that** connected in front of all external parity inputs are inverter chains having a different number (M₁, M₂, ... M_{L}) of inverters (inv_{1,-M1} ... inv_{1,-1}, ... inv_{L,-ML}, inv_{L,-1}), to which the external parity signal (PS) is supplied.

28. A random number generator according to Claim 27,
**characterised in that** the sum of the periodicity of an output signal (A₁, A₂ ... A_{L}) generated by a first of the ring oscillators (32, 33, 34, 41, 42, 43, 71, 72, 73, 81, 82, 83, 84), said periodicity having the value of an odd multiple (K₁, K₂, K₃, ... K_{L}) of a delay time of a gate, and of the delay time duration of the external parity signal (PS) at the external parity input (36, 37, 38, 45, 46, 47) of the first of the ring oscillators (32, 33, 34, 41, 42, 43, 71, 72, 73, 81, 82, 83, 84), said delay time duration having the value of a multiple (M₁, M₂, M₃, ... M_{L}) of the delay time of a gate, is an odd multiple of the delay time of a gate
**and in that** the sum of the periodicity of an output signal (A₁, A₂ ... A_{L}) generated by a second of the ring oscillators (32, 33, 34, 41, 42, 43, 71, 72, 73, 81, 82, 83, 84), said periodicity having the value of an odd multiple (K₁, K₂, K₃, ... K_{L}) of the delay time of a gate, and of the delay time duration of the external parity signal (PS) at the external parity input (36, 37, 38, 45, 46, 47) of the second of the ring oscillators (32, 33, 34, 41, 42, 43, 71, 72, 73, 81, 82, 83, 84), said delay time duration having the value of a multiple (M₁, M₂, M₃, ... M_{L}) of the delay time of a gate, is an even multiple of the delay time of a gate.

29. A random number generator according to one according to Claims 15 to 28,
**characterised in that** sampling means are provided, which sample the external parity signal (PS) at a specified rate (v) for the generation of random bits (ZB)
**and/or in that** sampling means are provided, which sample the further parity signal (PP) at a specified rate (v) for the generation of random bits (ZB).

30. A random number generator according to one according to Claims 15 to 29,
**characterised in that** several random number generators according to one of Claims 15 to 29 are provided, which generate external, in particular sampled, parity signals (PS),
**and in that** super parity signal generating means are provided, which generate a super parity signal (SP) representing a logical state ("0", "1"), which super parity signal assumes the logical state "1" if and only if an odd number of the external, in particular sampled, parity signals (PS) exhibits the logical state "1", and which otherwise assumes the logical state "0",
**and/or in that** several random number generators according to one of Claims 15 to 19 are provided, which generate further, in particular sampled, parity signals (PP),
**and in that** super parity signal generating means are provided, which generate a super parity signal (SP) representing a logical state ("0", "1"), which super parity signal assumes the logical state "1" if and only if an odd number of the further, in particular sampled, parity signals (PP) exhibits the logical state "1", and which otherwise assumes the logical state "0".

31. A random number generator according to Claim 30,
**characterised in that** sampling means are provided, which sample the external parity signals (PS) or the further parity signals (PP) synchronously at a specified rate (v) for the generation of random bits (ZB)
**and/or in that** sampling means are provided, which sample the super parity signal (SP) at a specified rate (v) for the generation of random bits (ZB).

32. A random number generator according to one of Claims 1 to 31,
**characterised in that** the sampling means are set up to perform sampling at random, non-uniform sampling intervals and in particular to perform sampling when a random bit (ZB) randomly generated by one of the random generators according to Claims 15 to 31 assumes a predetermined logical state ("1").

33. A random number generator according to one of Claims 29 to 32,
**characterised in that** the sampling means comprise a D flip-flop (88₁, 88₂, ... 88_{L}) that is driven in a clock pulse (Cp) by a clock pulse generator, in particular by an astable multi-vibrator (87, 87₁, 87₂, ... 87_{L}) or by a ring oscillator with feedback (RRO).

## Revendications

1. Procédé pour générer des nombres aléatoires, selon lequel au moins deux oscillateurs annulaires (32, 33, 34, 41, 42, 43, 71, 72, 73, 81, 82, 83, 84) génèrent des signaux de sortie numériques oscillants (A1, A2, ..., AL) ayant la même périodicité ou une périodicité différente, en générant un signal de parité externe (PS) représentant un état logique ("0, "1") et prenant alors l'état logique "1" précisément lorsqu'un nombre impair de signaux de sortie (A1, A2, ..., AL) a l'état logique "1", ou sinon prenant l'état logique "0",
**caractérisé en ce que**
le signal de parité externe (PS) est itéré respectivement sur une entrée de parité externe (36, 37, 38, 45, 46, 47) des oscillateurs annulaires respectifs (32, 33, 34, 41, 42, 43, 71, 72, 73, 81, 82, 83, 84).

2. Procédé selon la revendication 1,
**caractérisé en ce que**
pour chaque oscillateur annulaire (32, 33, 34, 41, 42, 43, 71, 72, 73, 81, 82, 83, 84) un signal de parité interne (P₁, P₂, P₃, P₄, ..., P_{L}), représentant un état logique prédéterminé ("0", "1") est généré lorsque soit le signal de sortie (A₁, A₂, ... A_{L}) de l'oscillateur annulaire respectif (32, 33, 34, 41, 42, 43, 71, 72, 73, 81, 82, 83, 84) soit le signal itéré sur l'entrée de parité externe (36, 37, 38, 45, 46, 47) de l'oscillateur annulaire respectif (32, 33, 34, 41, 42, 43, 71, 72, 73, 81, 82, 83, 84) prend un état logique ("1") prédéfini.

3. Procédé selon la revendication 2,
**caractérisé en ce qu'**
on génère un autre signal de parité (PP) représentant un état logique ("0", "1") et qui prend alors l'état logique "1" précisément lorsqu'un nombre impair de signaux de parité interne (P₁, P₂, P₃, P₄, ... P_{L}) a l'état logique "1", ou sinon qui prend l'état logique "0".

4. Procédé selon la revendication 3,
**caractérisé en ce que**
les passages entre signaux de parité interne (P₁, P₂, P₃, P₄, ... P_{Z}) sont comptés avant la génération des signaux de parité.

5. Procédé selon l'une quelconque des revendications précédentes,
**caractérisé en ce qu'**
au moins l'un des oscillateurs annulaires (32, 33, 34, 41, 42, 43, 71, 72, 73, 81, 82, 83, 84) est excité à l'aide d'un signal de départ ("1") acheminé vers une entrée correspondante (démarrage/arrêt) de l'oscillateur annulaire (32, 33, 34, 41, 42, 43, 71, 72, 73, 81, 82, 83, 84) correspondant en vue de l'oscillation.

6. Procédé selon la revendication 5,
**caractérisé en ce que**
tous les oscillateurs annulaires (32, 33, 34, 41, 42, 43, 71, 72, 73, 81, 82, 83, 84) sont excités de préférence en même temps, à l'aide du même signal de démarrage ("1") en vue de l'oscillation.

7. Procédé selon l'une quelconque des revendications précédentes,
**caractérisé en ce que**
le signal de parité externe (PS) est inversé avant son itération sur au moins l'une des entrées de parité externe (47).

8. Procédé selon l'une quelconque des revendications précédentes,
**caractérisé en ce que**
le signal de parité externe (PS) est retardé avant son itération sur au moins l'une des sorties de parité externe (47).

9. Procédé selon la revendication 8,
**caractérisé en ce que**
le signal de parité externe (PS) est retardé de différentes périodes de temps (τ) avant son itération sur différentes entrées de parité externe (36, 37, 38, 45, 46, 47).

10. Procédé selon la revendication 9,
**caractérisé en ce que**
les périodicités des oscillateurs annulaires (32, 33, 34, 41, 42, 43, 71, 72, 73, 81, 82, 83, 84) et la durée des temps de retard du signal de parité externe (PS) sur les entrées de parité externe (36, 37, 38, 45, 46, 47) des oscillateurs annulaires (32, 33, 34, 41, 42, 43, 71, 72, 73, 81, 82, 83, 84) sont choisies de manière à ce que la somme de la périodicité, égale à un multiple impair (K₁, K₂, K₃, ... K_{L}) d'un temps de retard d'une porte, d'un signal de sortie (A₁, A₂, ... A_{L}) généré par un premier oscillateur parmi les oscillateurs annulaires (32, 33, 34, 41, 42, 43, 71, 72, 73, 81, 82, 83, 84) et de la durée du temps de retard, égale à un multiple (M₁, M₂, M₃, ... M_{L}) du temps de retard d'une porte, du signal de parité externe (PS) sur l'entrée de parité externe (36, 37, 38, 45, 46, 47) du premier oscillateur annulaire (32, 33, 34, 41, 42, 43, 71, 72, 73, 81, 82, 83, 84), soit un multiple impair du temps de retard d'une porte et à ce que la somme de la périodicité, égale à un multiple impair (K₁, K₂, K₃, ... K_{L}) du temps de retard d'une porte, d'un signal de sortie (A₁, A₂, ... A_{L}) généré par un deuxième oscillateur parmi les oscillateurs annulaires (32, 33, 34, 41, 42, 43, 71, 72, 73, 81, 82, 83, 84) et de la durée du temps de retard, égale à un multiple (M₁, M₂, M₃, ... M_{L}) du temps de retard d'une porte du signal de parité externe (PS) sur l'entrée de parité externe (36, 37, 38, 45, 46, 47) du deuxième oscillateur annulaire (32, 33, 34, 41, 42, 43, 71, 72, 73, 81, 82, 83, 84) soit un multiple pair du temps de retard d'une porte.

11. Procédé selon l'une quelconque des revendications précédentes,
**caractérisé en ce que**
le signal de parité externe (PS) est échantillonné à un débit (v) prédéfini pour générer des bits aléatoires (78), ou l'autre signal de parité (PP) est échantillonné à un débit (v) prédéfini pour générer des bits aléatoires (78).

12. Procédé selon l'une quelconque des revendications précédentes,
**caractérisé en ce qu'**
on génère plusieurs signaux de parité externe (PS), en particulier échantillonnés, et un supersignal de parité (SP), représentant un état logique ("0", "1"), qui prend alors l'état logique "1" précisément lorsqu'un nombre impair de signaux de parité externe (PS), en particulier échantillonnés, a l'état logique "1", et qui prend sinon l'état logique "0", ou
on génère plusieurs autres signaux de parité, en particulier échantillonnés et un supersignal de parité (SP), représentant un état logique ("0", "1") qui prend alors l'état logique "1" précisément lorsqu'un nombre impair d'autres signaux de parité, en particulier échantillonnés, a l'état logique "1", ou sinon l'état logique "0".

13. Procédé selon la revendication 12,
**caractérisé en ce que**
les signaux de parité externe (PS) et les autres signaux de parité (PS) sont échantillonnés de manière synchrone pour générer des bits aléatoires (ZB) à un débit (v) prédéfini ou
le supersignal de parité (SP) est échantillonné pour générer des bits aléatoires (ZB) à un débit (v) prédéfini.

14. Procédé selon l'une quelconque des revendications 11 à 13,
**caractérisé en ce que**
l'échantillonnage est réalisé à des intervalles aléatoires, non uniformes,
en particulier, l'échantillonnage est réalisé lorsqu'un bit aléatoire (ZB) généré de manière aléatoire selon l'un quelconque des procédés selon les revendications 1 à 12 prend un état logique prédéfini ("1").

15. Générateur de nombres aléatoires comportant au moins deux oscillateurs annulaires (32, 33, 34, 41, 42, 43, 71, 72, 73, 81, 82, 83, 84), constitués en particulier de chaînes d'inverseurs itérées en oscillation libre indépendante comportant un nombre impair (K) d'inverseurs branchés l'un derrière l'autre (inv_{1,2}, inv_{2,1}, inv_{3,1}, ... inv_{i,j}, ... inv_{L,KL}) qui génèrent des signaux de sortie (A₁, A₂, ... A_{L}) numériques oscillants ayant une périodicité différente, et comportant des premiers moyens pour générer des signaux de parité (XOR) qui produisent un signal de parité externe (PS) représentant un état logique ("0", "1") prédéterminé, lequel prend alors précisément l'état logique "1" lorsqu'un nombre impair de signaux de sortie (A₁, A₂, ... A_{L}) a l'état logique "1", et qui sinon prend l'état logique "0",
**caractérisé en ce qu'**
on prévoit des moyens d'itération (xor₁, xor₂, xor₃, xor₄, ... xor_{L}) qui itèrent le signal de parité externe (PS) sur respectivement une entrée de parité externe (36, 37, 38, 45, 46, 47) des oscillateurs annulaires respectifs (32, 33, 34, 41, 42, 43, 71, 72, 73, 81, 82, 83, 84).

16. Générateur de nombres aléatoires selon la revendication 15,
**caractérisé en ce que**
les premiers moyens pour générer des signaux de parité comprennent une porte XOR (XOR) sur les entrées de laquelle les signaux de sortie (A₁, A₂, ... A_{L}) se trouvent.

17. Générateur de nombres aléatoires selon l'une quelconque des revendications 15 ou 16,
**caractérisé en ce que**
des deuxièmes moyens pour générer des signaux de parité (xor₁, xor₂, xor₃, ... xor_{L}) génèrent, pour chaque oscillateur annulaire (32, 33, 34, 41, 42, 43, 71, 72, 73, 81, 82, 83, 84) respectivement un signal de parité interne (P₁, P₂, P₃, P₄, ... P_{L}), représentant un état logique ("1") prédéfini, qui prend alors l'état logique "1" précisément lorsque soit le signal de sortie (A₁, A₂, ... A_{L}) de l'oscillateur annulaire respectif (32, 33, 34, 41, 42, 43, 71, 72, 73, 81, 82, 83, 84) soit le signal itéré sur l'entrée de parité externe (36, 37, 38, 45, 46, 47) de l'oscillateur annulaire respectif (32, 33, 34, 41, 42, 43, 71, 72, 73, 81, 82, 83, 84) prend un état logique prédéfini ("1").

18. Générateur de nombres aléatoires selon la revendication 17,
**caractérisé en ce que**
les deuxièmes moyens pour générer des signaux de parité comprennent des portes XOR (xor₁, xor₂, xor₃, ... xor_{L} comportant chacune une entrée de parité externe et une entrée de signal de sortie, sachant que sur l'entrée de parité se trouve un signal dérivé du signal de parité externe (PS) et sur l'entrée du signal de sortie le signal de sortie respectif (A₁, A₂, ... A_{L}) de l'oscillateur annulaire respectif (32, 33, 34, 41, 42, 43, 71, 72, 73, 81, 82, 83, 84).

19. Générateur de nombres aléatoires selon la revendication 18,
**caractérisé en ce que**
des troisièmes moyens pour générer des signaux de parité génèrent un autre signal de parité (WP), représentant un état logique ("0", "1"), qui prend alors l'état logique "1" précisément lorsqu'un nombre impair de signaux de parité interne (P₁, P₂, P₃, P₄, ... P_{L}) a l'état logique "1", et qui sinon prend l'état logique "0".

20. Générateur de nombres aléatoires selon la revendication 19,
**caractérisé en ce que**
des moyens de comptage (88₁, 88₂, ... 88_{L} comptent des passages entre les signaux de parité interne (P₁, P₂, P₃, ... P_{L}) avant la génération des signaux de parité.

21. Générateur de nombres aléatoires selon la revendication 20,
**caractérisé en ce que**
les moyens de comptage comprennent un compteur binaire (88₁, 88₂, ... 88_{L}), en particulier une chaîne avec des bascules, de préférence des bascules JK (JK₁, JK₂, ... JK_{Z}).

22. Générateur de nombres aléatoires l'une quelconque des revendications 15 à 21,
**caractérisé en ce que**
des moyens de démarrage génèrent un signal de démarrage ("1") et conduisent à une entrée (démarrage/arrêt) d'au moins un des oscillateurs annulaires (32, 33, 34, 41, 42, 43, 71, 72, 73, 81, 82, 83, 84) de sorte que celui-ci soit excité pour l'oscillation.

23. Générateur de nombres aléatoires selon la revendication 22,
**caractérisé en ce qu'**
au moins un des oscillateurs annulaires (32, 33, 34, 41, 42, 43, 71, 72, 73, 81, 82, 83, 84) comporte, à la place d'un inverseur (inv₁) côté entrée, une porte NAND (nand₁, nand_{1,1}, nand_{2,1}, nand_{3,1}, ... nand_{i,1}, nand_{L,1}) comportant l'entrée (démarrage/arrêt) pour acheminer le signal de démarrage ("1").

24. Générateur de nombres aléatoires selon l'une quelconque des revendications 22 ou 23,
**caractérisé en ce que**
les moyens de démarrage sont configurés de manière à ce que tous les oscillateurs annulaires (32, 33, 34, 41, 42, 43, 71, 72, 73, 81, 82, 83, 84) sont excités de préférence en même temps, à l'aide du même signal de démarrage ("1") pour l'oscillation.

25. Générateur de nombres aléatoires selon la revendication 24,
**caractérisé en ce que**
tous les oscillateurs annulaires (32, 33, 34, 41, 42, 43, 71, 72, 73, 81, 82, 83, 84) comprennent, à la place d'un inverseur (inv₁) côté entrée, respectivement une porte NAND (nand₁, nand_{1,.1}, nand_{2,1}, nand_{3,1}, ... nand_{i,1}, nand_{L,1}) comportant chacune une entrée (démarrage/arrêt), ces entrées étant reliées pour acheminer le signal de démarrage ("1").

26. Générateur de nombres aléatoires selon l'une quelconque des revendications 15 à 25,
**caractérisé en ce qu'**
au moins une entrée de parité externe (47) est précédée d'un inverseur (inv_{3,-1}, inv_{1,-M1}, ... inv_{1,-1}, ... inv_{L,-ML}, ... inv_{L,-1}) vers lequel le signal de parité externe (PS) est acheminé.

27. Générateur de nombres aléatoires selon la revendication 26,
**caractérisé en ce que**
toutes les entrées de parité externe sont précédées de chaînes d'inverseurs comportant un nombre différent (M₁, M₂, ..., M_{L}) d'inverseurs (inv_{1,-M1}, ... inv_{1,-1}, ... inv_{L,-ML}, ... inv_{L,-1}) vers lequel le signal de parité externe (PS) est acheminé.

28. Générateur de nombres aléatoires selon la revendication 27,
**caractérisé en ce que**
la somme de la périodicité, égale à un multiple impair (K₁, K₂, K₃, ... K_{L}) d'un temps de retard d'une porte, d'un signal de sortie (A₁, A₂, ... A_{L}) généré par un premier oscillateur parmi les oscillateurs annulaires (32, 33, 34, 41, 42, 43, 71, 72, 73, 81, 82, 83, 84) et de la durée du temps de retard, égale à un multiple (M₁, M₂, M₃, ..., M_{L}) du temps de retard d'une porte, du signal de parité externe (PS) sur l'entrée de parité externe (36, 37, 38, 45, 46, 47) du premier des oscillateurs annulaires (32, 33, 34, 41, 42, 43, 71, 72, 73, 81, 82, 83, 84), est un multiple impair du temps de retard d'une porte et
la somme de la périodicité, égale à un multiple impair (K₁, K₂, K₃, ... K_{L}) du temps de retard d'une porte, d'un signal de sortie (A₁, A₂, ... A_{L}) généré par un deuxième oscillateur parmi les oscillateurs annulaires (32, 33, 34, 41, 42, 43, 71, 72, 73, 81, 82, 83, 84) et de la durée du temps de retard, égale à un multiple (M₁, M₂, M₃, ..., M_{L}) du temps de retard d'une porte, du signal de parité externe (PS) sur l'entrée de parité externe (36, 37, 38, 45, 46, 47) du deuxième des oscillateurs annulaires (32, 33, 34, 41, 42, 43, 71, 72, 73, 81, 82, 83, 84) est un multiple pair du temps de retard d'une porte.

29. Générateur de nombres aléatoires selon l'une quelconque des revendications 15 à 28,
**caractérisé en ce que**
des moyens d'échantillonnage échantillonnent le signal de parité externe (PS) pour générer des bits aléatoires (ZB) à un débit prédéfini (v), et/ou
des moyens d'échantillonnage échantillonnent l'autre signal de parité (PP) pour générer des bits aléatoires (ZB) à un débit prédéfini (v).

30. Générateur de nombres aléatoires selon l'une quelconque des revendications 15 à 29,
**caractérisé en ce que**
plusieurs générateurs de nombres aléatoires selon l'une quelconque des revendications 15 à 29 génèrent des signaux de parité externe (PS), en particulier échantillonnés,
et des moyens pour générer des supersignaux de parité produisent un supersignal de parité (SP) représentant un état logique ("0", "1"), qui prend alors l'état logique "1" précisément lorsqu'un nombre impair de signaux de parité externe (PS), en particulier échantillonnés, a l'état logique "1", et qui sinon prend l'état logique "0", et/ou
plusieurs générateurs de nombres aléatoires selon l'une quelconque des revendications 15 à 29 génèrent d'autres signaux de parité (PP), en particulier échantillonnés, et
des moyens pour générer des supersignaux de parité produisent un supersignal de parité (SP) représentant un état logique ("0", "1"), qui prend alors l'état logique "1" précisément lorsqu'un nombre impair d'autres signaux de parité (PP), en particulier échantillonnés, ont l'état logique "1", ou qui prend sinon l'état logique "0".

31. Générateur de nombres aléatoires selon la revendication 30,
**caractérisé en ce que**
des moyens d'échantillonnage échantillonnent de manière synchrone les signaux de parité externe (PS) ou bien les autres signaux de parité (PP) pour générer des bits aléatoires (ZB) à un débit (v) prédéfini, et/ou
des moyens d'échantillonnage échantillonnent le supersignal de parité (SP) pour générer des bits aléatoires (ZB) à un taux prédéfini (v).

32. Générateur de nombres aléatoires selon l'une quelconque des revendications 29 à 31,
**caractérisé en ce que**
les moyens d'échantillonnage sont réglés pour réaliser un échantillonnage à des intervalles d'échantillonnage aléatoires, non uniformes et, en particulier procéder à un échantillonnage lorsqu'un bit aléatoire (ZB) généré de manière aléatoire par l'un des générateurs aléatoires selon les revendications 15 à 31 prend un état logique ("1") prédéterminé.

33. Générateur de nombres aléatoires selon l'une quelconque des revendications 29 à 32,
**caractérisé en ce que**
les moyens d'échantillonnage comprennent une bascule D (88₁, 88₂, ... 88_{L}) commandée, à une cadence (C_{P}) par une horloge, en particulier un multivibrateur astable (87, 87₁, 87₂, ... 87_{L}) ou par un oscillateur annulaire itéré (RRO).
